# EUROPEAN PATENT SPECIFICATION

(11) **EP 3 087 042 B1**
(45) Date of publication and mention of the grant of the patent: **17.02.2021**
(21) Application number: 14875110.0
(22) Date of filing: 23.12.2014
(51) Int. Cl.: C03C 13/06, C03C 3/078, C03C 3/087, C04B 35/622, C03C 4/00, C03C 25/10

(54) **NON-BIOPERSISTENT INORGANIC GLASS FIBER WITH IMPROVED SHRINKAGE AND STRENGTH**
NICHT-BIOPERSISTENTE ANORGANISCHE GLASFASER MIT VERBESSERTER SCHRUMPFUNG UND STÄRKE
FIBRE DE VERRE INORGANIQUE NON BIOPERSISTANTE À RETRAIT ET RÉSISTANCE AMÉLIORÉS

(30) Priority: 23.12.2013 US 201361920045 P; 13.06.2014 US 201462011833 P
(43) Date of publication of application: 02.11.2016
(73) Proprietor: Unifrax I LLC, Tonawanda, NY 14150 (US)
(72) Inventor: ZHAO, Donghui, Tonawanda, New York 14150 (US); ZOITOS, Bruce K., Williamsville, New York 14221 (US); ANDREJCAK, Michael J., Tonawanda, New York 14150 (US); HAMILTON, Jason M., Lancaster, New York 14086 (US)
(74) Representative: Lederer & Keller Patentanwälte Partnerschaft mbB
(86) International application number: PCT/US2014/072144
(87) International publication number: WO 2015/100320

(56) References cited:
- EP-A1- 0 222 478
- WO-A1-2006/048610
- JP-A- 2002 338 300
- US-A1- 2005 032 620
- US-A1- 2009 130 937
- US-A1- 2010 093 510
- US-A1- 2010 298 110
- US-A1- 2013 333 594

## Description

### TECHNICAL FIELD

A high temperature resistant inorganic fiber that is useful as a thermal, electrical, or acoustical insulating material, and which has a use temperature of 1260°C and greater is provided. The high temperature resistant inorganic fiber is easily manufacturable, exhibits low shrinkage after exposure to the use temperature, retains good mechanical strength after continued exposure to the use temperature, and exhibits low biopersistence in physiological fluids.

### BACKGROUND

The insulation material industry has determined that it is desirable to utilize fibers in thermal, electrical and acoustical insulating applications, which are not durable in physiological fluids, that is, fiber compositions which exhibit a low biopersistence in physiological fluids.

WO 2006/048610 discloses alkaline earth silicate fibres comprising silica, magnesia and lithium oxide. JP 2002-338300 discloses inorganic fibers having as essential components silica, magnesia and strontium oxide.

While candidate materials have been proposed, the use temperature limit of these materials have not been high enough to accommodate many of the applications to which high temperature resistant fibers are applied. For example, such low biopersistence fibers exhibit high shrinkage at service temperatures and/or reduced mechanical strength when exposed to service temperatures ranging from 1000°C to 1400°C as compared to the performance of refractory ceramic fibers.

The high temperature resistant, low biopersistence fibers should exhibit minimal shrinkage at expected exposure temperatures, and after prolonged or continuous exposure to the expected use temperatures, in order to provide effective thermal protection to the article being insulated.

In addition to temperature resistance as expressed by shrinkage characteristics that are important in fibers that are used in insulation, it is also required that the low biopersistence fibers have mechanical strength characteristics during and following exposure to the expected use or service temperature, that will permit the fiber to maintain its structural integrity and insulating characteristics in use.

One characteristic of the mechanical integrity of a fiber is its after service friability. The more friable a fiber, that is, the more easily it is crushed or crumbled to a powder, the less mechanical integrity it possesses. In general, inorganic fibers that exhibit both high temperature resistance and low biopersistence in physiological fluids also exhibit a high degree of after service friability. This results in a brittle fiber lacking the strength or mechanical integrity after exposure to the service temperature to be able to provide the necessary structure to accomplish its insulating purpose. Other measures of mechanical integrity of fibers include compression strength and compression recovery.

It is desirable to produce an improved inorganic fiber composition that is readily manufacturable from a fiberizable melt of desired ingredients, which exhibits low biopersistence in physiological fluids, low shrinkage during and after exposure to service temperatures of 1260°C and greater and, which exhibits low brittleness after exposure to the expected use temperatures, and which maintains mechanical integrity after exposure to use temperatures of 1260°C and greater.

Provided is a high temperature resistant alkaline-earth silicate fiber exhibiting improved thermal stability when the inorganic fiber is exposed to elevated temperatures of 1000°C to 1500°C. It has been found that the inclusion of suitable amounts of lithium oxide and strontium oxide to an alkaline-earth silicate inorganic fiber reduces fiber shrinkage and enhances mechanical strength beyond that of alkaline earth silicate fibers without the lithium oxide and strontium oxide additions. The fiber exhibits low biopersistence in physiological solutions, reduced linear shrinkage, and improved mechanical strength after exposure to expected use temperatures.

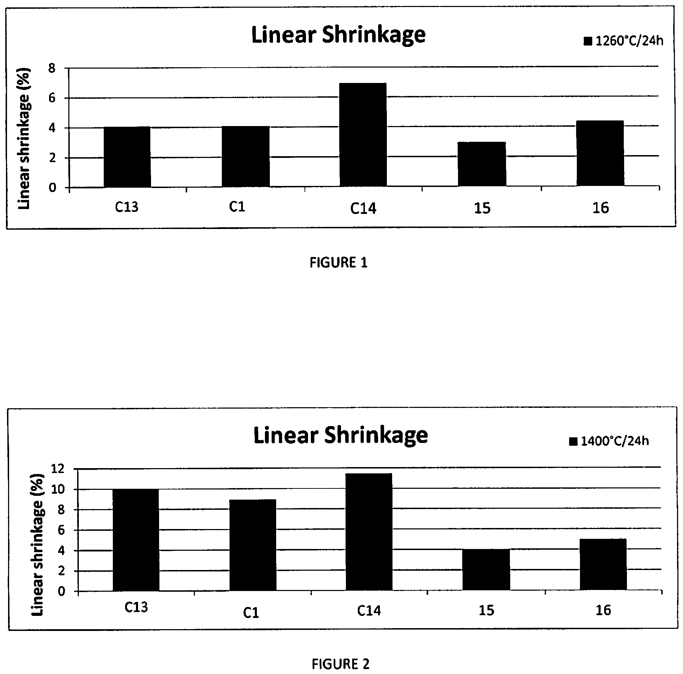

FIG. 1 is a graph comparing the linear shrinkage after exposure at 1260°C for 24 hours of sample fiber blankets prepared from alumino-silicate refractory ceramic fibers, commercially available biosoluble magnesium-silicate fibers, and the presently disclosed fibers.
FIG. 2 is a graph comparing the linear shrinkage after exposure at 1400°C for 24 hours of sample fiber blankets prepared from alumino-silicate refractory ceramic fibers, commercially available biosoluble magnesium-silicate fibers, and the presently disclosed fibers.

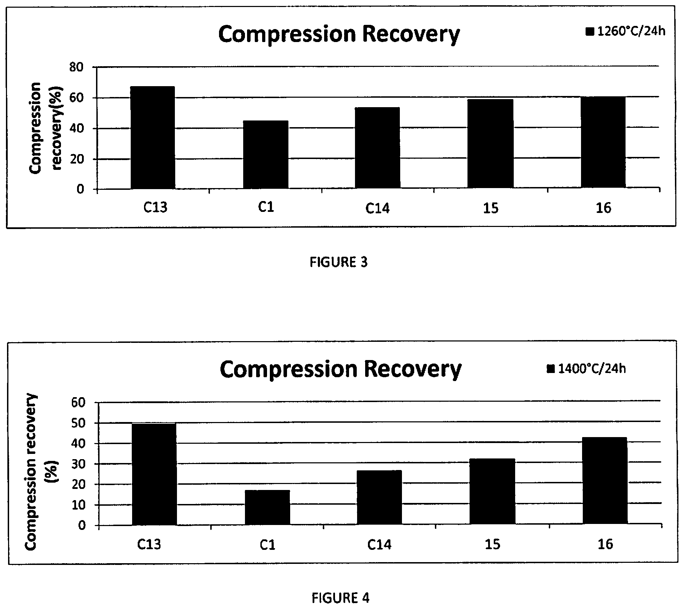

FIG. 3 is a graph comparing the compression recovery after exposure at 1260°C for 24 hours of sample fiber blankets prepared from alumino-silicate refractory ceramic fibers, commercially available biosoluble magnesium-silicate fibers, and the presently disclosed fibers.
FIG. 4 is a graph comparing the compression recovery after exposure at 1400°C for 24 hours of sample fiber blankets prepared from alumino-silicate refractory ceramic fibers, commercially available biosoluble magnesium-silicate fibers, and the presently disclosed fibers.

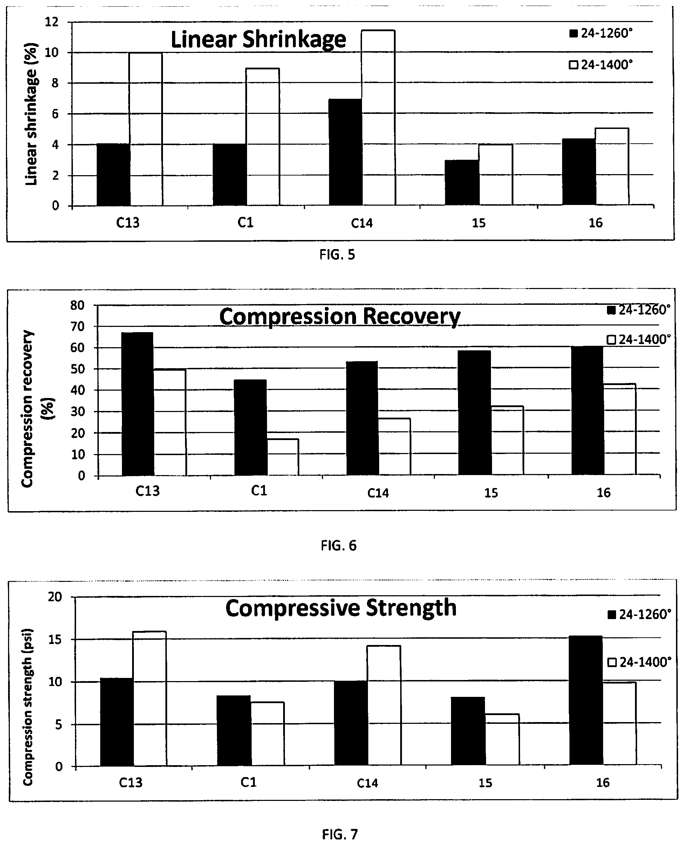

FIG. 5 is a graph comparing the linear shrinkage of sample fiber blankets prepared from alumino-silicate refractory ceramic fibers, commercially available biosoluble magnesium-silicate fibers, and the presently disclosed fibers after exposure at 1260°C for 24 hours and 1400°C for 24 hours.
FIG. 6 is a graph comparing the compression recovery of sample fiber blankets prepared from alumino-silicate refractory ceramic fibers, commercially available biosoluble magnesium-silicate fibers, and the presently disclosed fibers after exposure at 1260°C for 24 hours and 1400°C for 24 hours.
FIG. 7 is a graph comparing the compressive strength of sample fiber blankets prepared from alumino-silicate refractory ceramic fibers, commercially available biosoluble magnesium-silicate fibers, and the presently disclosed fibers after exposure at 1260°C for 24 hours and 1400°C for 24 hours.
FIG. 8 is a graph showing the effect of strontium on compression recovery of a magnesium-silicate fiber containing a combination of strontium and lithium additions and after exposure to a temperature of 1400°C for 24 hours.

According to certain disclosures, the inorganic fiber comprises the fiberization product of silica, magnesia, lithium oxide and strontium oxide.

According to certain disclosures, the inorganic fiber comprises the fiberization product of silica, magnesia, calcia, lithium oxide and strontium oxide.

According to certain disclosures, the inorganic fiber comprises the fiberization product of silica, calcia, lithium oxide and strontium oxide.

According to certain disclosures, the inorganic fiber comprises the fiberization product of silica, magnesia, lithium oxide, strontium oxide and a viscosity modifier.

According to certain disclosures, the inorganic fiber comprises the fiberization product of silica, magnesia, calcia, lithium oxide, strontium oxide and a viscosity modifier.

According to certain disclosures, the inorganic fiber comprises the fiberization product of silica, calcia, lithium oxide, strontium oxide and a viscosity modifier.

According to certain disclosures, the inorganic fiber comprises the fiberization product of silica, magnesia, lithium oxide, strontium oxide and alumina as a viscosity modifier.

According to certain disclosures, the inorganic fiber comprises the fiberization product of silica, magnesia, calcia, lithium oxide, strontium oxide and alumina as a viscosity modifier.

According to certain disclosures, the inorganic fiber comprises the fiberization product of silica, calcia, lithium oxide, strontium oxide and alumina as a viscosity modifier.

According to certain disclosures, the inorganic fiber comprises the fiberization product of silica, magnesia, lithium oxide, strontium oxide and boria as a viscosity modifier.

According to certain disclosures, the inorganic fiber comprises the fiberization product of silica, magnesia, calcia, lithium oxide, strontium oxide and boria as a viscosity modifier.

According to certain disclosures, the inorganic fiber comprises the fiberization product of silica, calcia, lithium oxide, strontium oxide and boria as a viscosity modifier.

According to certain disclosures, the inorganic fiber comprises the fiberization product of silica, magnesia, lithium oxide, strontium oxide and a mixture of alumina and boria as viscosity modifier.

According to certain disclosures, the inorganic fiber comprises the fiberization product of silica, magnesia, calcia, lithium oxide, strontium oxide and a mixture of alumina and boria as a viscosity modifier.

According to certain disclosures, the inorganic fiber comprises the fiberization product of silica, calcia, lithium oxide, strontium oxide and mixture of alumina and boria as a viscosity modifier.

According to certain disclosures, the inorganic fiber comprises the fiberization product of silica, magnesia, zirconia, lithium oxide, strontium oxide and a viscosity modifier.

According to certain disclosures, the inorganic fiber comprises the fiberization product of silica, magnesia, zirconia, lithium oxide, strontium oxide and alumina as a viscosity modifier.

According to certain disclosures, the inorganic fiber comprises the fiberization product of silica, magnesia, zirconia, lithium oxide, strontium oxide and boria as a viscosity modifier.

According to certain disclosures, the inorganic fiber comprises the fiberization product of silica, magnesia, zirconia, lithium oxide, strontium oxide and a mixture of alumina and boria as a viscosity modifier.

According to certain illustrative disclosures, the inorganic fiber comprises the fiberization product of about 65 to about 86 weight percent silica, about 14 to about 35 weight percent magnesia, lithium oxide and strontium oxide.

According to certain illustrative embodiments, the inorganic fiber comprises the fiberization product of about 65 to about 86 weight percent silica, about 14 to about 35 weight percent magnesia, greater than 0 to about 0.1 weight percent lithium oxide and greater than 0 to about 1 weight percent strontium oxide.

According to certain illustrative embodiments, the inorganic fiber comprises the fiberization product of about 65 to about 86 weight percent silica, about 14 to about 35 weight percent magnesia, about 0.05 to about 0.1 weight percent lithium oxide and greater than 0 to about 1 weight percent strontium oxide.

According to certain illustrative embodiments, the inorganic fiber comprises the fiberization product of about 65 to about 86 weight percent silica, about 14 to about 35 weight percent magnesia, greater than 0 to about 0.1 weight percent lithium oxide, greater than 0 to about 1 weight percent strontium oxide and a viscosity modifier.

According to certain illustrative embodiments, the inorganic fiber comprises the fiberization product of about 65 to about 86 weight percent silica, about 14 to about 35 weight percent magnesia, about 0.05 to about 0.1 weight percent lithium oxide, greater than 0 to about 1 weight percent strontium oxide and a viscosity modifier.

According to certain illustrative embodiments, the inorganic fiber comprises the fiberization product of about 65 to about 86 weight percent silica, about 14 to about 35 weight percent magnesia, greater than 0 to about 0.1 weight percent lithium oxide, greater than 0 to about 1 strontium oxide and alumina as a viscosity modifier.

According to certain illustrative embodiments, the inorganic fiber comprises the fiberization product of about 65 to about 86 weight percent silica, about 14 to about 35 weight percent magnesia, greater than 0 to about 0.1 weight percent lithium oxide, greater than 0 to about 1 weight percent strontium oxide and boria as a viscosity modifier.

According to certain illustrative embodiments, the inorganic fiber comprises the fiberization product of about 65 to about 86 weight percent silica, about 14 to about 35 weight percent magnesia, about 0.05 to about 0.1 weight percent lithium oxide, greater than 0 to about 1 weight percent strontium oxide and boria as a viscosity modifier.

According to certain illustrative embodiments, the inorganic fiber comprises the fiberization product of about 65 to about 86 weight percent silica, about 14 to about 35 weight percent magnesia, greater than 0 to about 0.1 weight percent lithium oxide, greater than 0 to about 1 weight percent strontium oxide and a mixture of alumina and boria as a viscosity modifier.

According to certain illustrative embodiments, the inorganic fiber comprises the fiberization product of about 65 to about 86 weight percent silica, about 14 to about 35 weight percent magnesia, about 0.05 to about 0.1 weight percent lithium oxide, greater than 0 to about 1 weight percent strontium oxide and a mixture of alumina and boria as a viscosity modifier.

According to certain illustrative embodiments, the inorganic fiber comprises the fiberization product of about 65 to about 86 weight percent silica, about 14 to about 35 weight percent magnesia, greater than 0 to about 11 weight percent zirconia, greater than 0 to about 1 weight percent strontium oxide, and greater than 0 to about 0.1 weight percent lithium oxide.

According to certain illustrative embodiments, the inorganic fiber comprises the fiberization product of about 65 to about 86 weight percent silica, about 14 to about 35 weight percent magnesia, greater than 0 to about 11 weight percent zirconia, about 0.05 to about 0.1 weight percent lithium oxide, and greater than 0 to about 1 weight percent strontium oxide.

According to certain illustrative embodiments, the inorganic fiber comprises the fiberization product of about 65 to about 86 weight percent silica, about 14 to about 35 weight percent magnesia, greater than 0 to about 11 weight percent zirconia, greater than 0 to about 1 weight percent strontium oxide, greater than 0 to about 0.1 weight percent lithium oxide, and a viscosity modifier.

According to certain illustrative embodiments, the inorganic fiber comprises the fiberization product of about 65 to about 86 weight percent silica, about 14 to about 35 weight percent magnesia, greater than 0 to about 11 weight percent zirconia, about 0.05 to about 0.1 weight percent lithium oxide, greater than 0 to about 1 weight percent strontium oxide and a viscosity modifier.

According to certain illustrative embodiments, the inorganic fiber comprises the fiberization product of about 65 to about 86 weight percent silica, about 14 to about 35 weight percent magnesia, greater than 0 to about 11 weight percent zirconia, greater than 0 to about 1 weight percent strontium oxide, greater than 0 to about 0.1 weight percent lithium oxide, and alumina as a viscosity modifier.

According to certain illustrative embodiments, the inorganic fiber comprises the fiberization product of about 65 to about 86 weight percent silica, about 14 to about 35 weight percent magnesia, greater than 0 to about 11 weight percent zirconia, about 0.05 to about 0.1 weight percent lithium oxide, greater than 0 to about 1 weight percent strontium oxide and alumina as a viscosity modifier.

According to certain illustrative embodiments, the inorganic fiber comprises the fiberization product of about 65 to about 86 weight percent silica, about 14 to about 35 weight percent magnesia, greater than 0 to about 11 weight percent zirconia, greater than 0 to about 1 weight percent strontium oxide, greater than 0 to about 0.1 weight percent lithium oxide, and boria as a viscosity modifier.

According to certain illustrative embodiments, the inorganic fiber comprises the fiberization product of about 65 to about 86 weight percent silica, about 14 to about 35 weight percent magnesia, greater than 0 to about 11 weight percent zirconia, about 0.05 to about 0.1 weight percent lithium oxide, greater than 0 to about 1 weight percent strontium oxide and boria as a viscosity modifier.

According to certain illustrative embodiments, the inorganic fiber comprises the fiberization product of about 65 to about 86 weight percent silica, about 14 to about 35 weight percent magnesia, greater than 0 to about 1 weight percent strontium oxide, greater than 0 to about 0.1 weight percent lithium oxide, and a mixture of alumina and boria as a viscosity modifier.

According to certain illustrative embodiments, the inorganic fiber comprises the fiberization product of about 65 to about 86 weight percent silica, about 14 to about 35 weight percent magnesia, greater than 0 to about 11 weight percent zirconia, about 0.05 to about 0.1 weight percent lithium oxide, greater than 0 to about 1 weight percent strontium oxide and a mxture of alumina and boria as a viscosity modifier.

According to certain illustrative embodiments, the inorganic fiber comprises the fiberization product of about 65 to about 86 weight percent silica, about 14 to about 35 weight percent magnesia, greater than 0 to about 11 weight percent zirconia, greater than 0 to about 1 weight percent strontium oxide, greater than 0 to about 0.1 weight percent lithium oxide, and greater than 0 to about 2 weight percent alumina as a viscosity modifier.

According to certain illustrative embodiments, the inorganic fiber comprises the fiberization product of about 65 to about 86 weight percent silica, about 14 to about 35 weight percent magnesia, greater than 0 to about 11 weight percent zirconia, about 0.05 to about 0.1 weight percent lithium oxide, greater than 0 to about 1 weight percent strontium oxide and greater than 0 to about 2 weight percent alumina as a viscosity modifier.

According to certain illustrative embodiments, the inorganic fiber comprises the fiberization product of about 65 to about 86 weight percent silica, about 14 to about 35 weight percent magnesia, greater than 0 to about 11 weight percent zirconia, greater than 0 to about 1 weight percent strontium oxide, greater than 0 to about 0.1 weight percent lithium oxide, and greater than 0 to about 1 weight percent boria as a viscosity modifier.

According to certain illustrative embodiments, the inorganic fiber comprises the fiberization product of about 65 to about 86 weight percent silica, about 14 to about 35 weight percent magnesia, greater than 0 to about 11 weight percent zirconia, about 0.05 to about 0.1 weight percent lithium oxide, greater than 0 to about 1 weight percent strontium oxide and greater than 0 to about 1 weight percent boria as a viscosity modifier.

According to certain illustrative embodiments, the inorganic fiber comprises the fiberization product of about 65 to about 86 weight percent silica, about 14 to about 35 weight percent magnesia, greater than 0 to about 1 weight percent strontium oxide, greater than 0 to about 0.1 weight percent lithium oxide, and a mixture of greater than 0 to about 2 weight percent alumina and greater than 0 to about 1 weight percent boria as a viscosity modifier.

According to certain illustrative embodiments, the inorganic fiber comprises the fiberization product of about 65 to about 86 weight percent silica, about 14 to about 35 weight percent magnesia, greater than 0 to about 11 weight percent zirconia, about 0.05 to about 0.1 weight percent lithium oxide, greater than 0 to about 1 weight percent strontium oxide and a mixture of greater than 0 to about 2 weight percent alumina and greater than 0 to about 1 weight percent boria as a viscosity modifier.

According to certain illustrative disclosures, the inorganic fiber comprises the fiberization product of about 70 to about 80 weight percent silica, about 15 to about 30 weight percent magnesia, lithium oxide and strontium oxide.

According to certain illustrative embodiments, the inorganic fiber comprises the fiberization product of about 70 to about 80 weight percent silica, about 15 to about 30 weight percent magnesia, greater than 0 to about 0.1 weight percent lithium oxide and greater than 0 to about 1 weight percent strontium oxide.

According to certain illustrative embodiments, the inorganic fiber comprises the fiberization product of about 70 to about 80 weight percent silica, about 15 to about 30 weight percent magnesia, about 0.05 to about 0.1 weight percent lithium oxide and greater than 0 to about 1 weight percent strontium oxide.

According to certain illustrative embodiments, the inorganic fiber comprises the fiberization product of about 70 to about 80 weight percent silica, about 15 to about 30 weight percent magnesia, greater than 0 to about 0.1 weight percent lithium oxide, greater than 0 to about 1 weight percent strontium oxide and a viscosity modifier.

According to certain illustrative embodiments, the inorganic fiber comprises the fiberization product of about 70 to about 80 weight percent silica, about 15 to about 30 weight percent magnesia, about 0.05 to about 0.1 weight percent lithium oxide, greater than 0 to about 1 weight percent strontium oxide and a viscosity modifier.

According to certain illustrative embodiments, the inorganic fiber comprises the fiberization product of about 70 to about 80 weight percent silica, about 15 to about 30 weight percent magnesia, greater than 0 to about 0.1 weight percent lithium oxide, greater than 0 to about 1 strontium oxide and alumina as a viscosity modifier.

According to certain illustrative embodiments, the inorganic fiber comprises the fiberization product of about 70 to about 80 weight percent silica, about 15 to about 30 weight percent magnesia, about 0.05 to about 0.1 weight percent lithium oxide, greater than 0 to about 1 weight percent strontium oxide and alumina as a viscosity modifier.

According to certain illustrative embodiments, the inorganic fiber comprises the fiberization product of about 70 to about 80 weight percent silica, about 15 to about 30 weight percent magnesia, greater than 0 to about 0.1 weight percent lithium oxide, greater than 0 to about 1 weight percent strontium oxide and boria as a viscosity modifier.

According to certain illustrative embodiments, the inorganic fiber comprises the fiberization product of about 70 to about 80 weight percent silica, about 15 to about 30 weight percent magnesia, about 0.05 to about 0.1 weight percent lithium oxide, greater than 0 to about 1 weight percent strontium oxide and boria as a viscosity modifier.

According to certain illustrative embodiments, the inorganic fiber comprises the fiberization product of about 70 to about 80 weight percent silica, about 15 to about 30 weight percent magnesia, greater than 0 to about 0.1 weight percent lithium oxide, greater than 0 to about 1 weight percent strontium oxide and a mixture of alumina and boria as a viscosity modifier.

According to certain illustrative embodiments, the inorganic fiber comprises the fiberization product of about 70 to about 80 weight percent silica, about 15 to about 30 weight percent magnesia, about 0.05 to about 0.1 weight percent lithium oxide, greater than 0 to about 1 weight percent strontium oxide and a mixture of alumina and boria as a viscosity modifier.

According to certain illustrative embodiments, the inorganic fiber comprises the fiberization product of about 70 to about 80 weight percent silica, about 15 to about 30 weight percent magnesia, greater than 0 to about 11 weight percent zirconia greater than 0 to about 1 weight percent strontium oxide, and greater than 0 to about 0.1 weight percent lithium oxide.

According to certain illustrative embodiments, the inorganic fiber comprises the fiberization product of about 70 to about 80 weight percent silica, about 15 to about 30 weight percent magnesia, greater than 0 to about 11 weight percent zirconia, about 0.05 to about 0.1 weight percent lithium oxide, and greater than 0 to about 1 weight percent strontium oxide.

According to certain illustrative embodiments, the inorganic fiber comprises the fiberization product of about 70 to about 80 weight percent silica, about 15 to about 30 weight percent magnesia, greater than 0 to about 11 weight percent zirconia, greater than 0 to about 1 weight percent strontium oxide, greater than 0 to about 0.1 weight percent lithium oxide and a viscosity modifier.

According to certain illustrative embodiments, the inorganic fiber comprises the fiberization product of about 70 to about 80 weight percent silica, about 15 to about 30 weight percent magnesia, greater than 0 to about 11 weight percent zirconia, about 0.05 to about 0.1 weight percent lithium oxide, greater than 0 to about 1 weight percent strontium oxide and a viscosity modifier.

According to certain illustrative embodiments, the inorganic fiber comprises the fiberization product of about 70 to about 80 weight percent silica, about 15 to about 30 weight percent magnesia, greater than 0 to about 11 weight percent zirconia, greater than 0 to about 1 weight percent strontium oxide, greater than 0 to about 0.1 weight percent lithium oxide, and alumina as a viscosity modifier.

According to certain illustrative embodiments, the inorganic fiber comprises the fiberization product of about 70 to about 80 weight percent silica, about 15 to about 30 weight percent magnesia, greater than 0 to about 11 weight percent zirconia, about 0.05 to about 0.1 weight percent lithium oxide, greater than 0 to about 1 weight percent strontium oxide and alumina as a viscosity modifier.

According to certain illustrative embodiments, the inorganic fiber comprises the fiberization product of about 70 to about 80 weight percent silica, about 15 to about 30 weight percent magnesia, greater than 0 to about 11 weight percent zirconia, greater than 0 to about 1 weight percent strontium oxide, greater than 0 to about 0.1 weight percent lithium oxide and boria as a viscosity modifier.

According to certain illustrative embodiments, the inorganic fiber comprises the fiberization product of about 70 to about 80 weight percent silica, about 15 to about 30 weight percent magnesia, greater than 0 to about 11 weight percent zirconia, about 0.05 to about 0.1 weight percent lithium oxide, greater than 0 to about 1 weight percent strontium oxide and boria as a viscosity modifier.

According to certain illustrative embodiments, the inorganic fiber comprises the fiberization product of about 70 to about 80 weight percent silica, about 15 to about 30 weight percent magnesia, greater than 0 to about 1 weight percent strontium oxide, greater than 0 to about 0.1 weight percent lithium oxide and a mixture of alumina and boria as a viscosity modifier.

According to certain illustrative embodiments, the inorganic fiber comprises the fiberization product of about 70 to about 80 weight percent silica, about 15 to about 30 weight percent magnesia, greater than 0 to about 11 weight percent zirconia, about 0.05 to about 0.1 weight percent lithium oxide, greater than 0 to about 1 weight percent strontium oxide and a mixture of alumina and boria as a viscosity modifier.

According to certain illustrative embodiments, the inorganic fiber comprises the fiberization product of about 70 to about 80 weight percent silica, about 15 to about 30 weight percent magnesia, greater than 0 to about 11 weight percent zirconia, greater than 0 to about 1 weight percent strontium oxide, greater than 0 to about 0.1 weight percent lithium oxide, and greater than 0 to about 2 weight percent alumina as a viscosity modifier.

According to certain illustrative embodiments, the inorganic fiber comprises the fiberization product of about 70 to about 80 weight percent silica, about 15 to about 30 weight percent magnesia, greater than 0 to about 11 weight percent zirconia, about 0.05 to about 0.1 weight percent lithium oxide, greater than 0 to about 1 weight percent strontium oxide and greater than 0 to about 2 weight percent alumina as a viscosity modifier.

According to certain illustrative embodiments, the inorganic fiber comprises the fiberization product of about 70 to about 80 weight percent silica, about 15 to about 30 weight percent magnesia, greater than 0 to about 11 weight percent zirconia, greater than 0 to about 1 weight percent strontium oxide, greater than 0 to about 0.1 weight percent lithium oxide, and greater than 0 to about 1 weight percent boria as a viscosity modifier.

According to certain illustrative embodiments, the inorganic fiber comprises the fiberization product of about 70 to about 80 weight percent silica, about 15 to about 30 weight percent magnesia, greater than 0 to about 11 weight percent zirconia, about 0.05 to about 0.1 weight percent lithium oxide, greater than 0 to about 1 weight percent strontium oxide and greater than 0 to about 1 weight percent boria as a viscosity modifier.

According to certain illustrative embodiments, the inorganic fiber comprises the fiberization product of about 70 to about 80 weight percent silica, about 15 to about 30 weight percent magnesia, greater than 0 to about 1 weight percent strontium oxide, greater than 0 to about 0.1 weight percent lithium oxide, and a mixture of greater than 0 to about 2 weight percent alumina and greater than 0 to about 1 weight percent boria as a viscosity modifier.

According to certain illustrative embodiments, the inorganic fiber comprises the fiberization product of about 70 to about 80 weight percent silica, about 15 to about 30 weight percent magnesia, greater than 0 to about 11 weight percent zirconia, about 0.05 to about 0.1 weight percent lithium oxide, greater than 0 to about 1 weight percent strontium oxide and a mixture of greater than 0 to about 2 weight percent alumina and greater than 0 to about 1 weight percent boria as a viscosity modifier.

According to certain illustrative embodiments, the inorganic fiber comprises the fiberization product of about 75 to about 80 weight percent silica, about 20 to about 25 weight percent magnesia, greater than 0 to about 0.1 weight percent lithium oxide and greater than 0 to about 1 weight percent strontium oxide.

According to certain illustrative embodiments, the inorganic fiber comprises the fiberization product of about 75 to about 80 weight percent silica, about 20 to about 25 weight percent magnesia, about 0.05 to about 0.1 weight percent lithium oxide, and greater than 0 to about 1 weight percent strontium oxide.

According to certain illustrative embodiments, the inorganic fiber comprises the fiberization product of about 75 to about 80 weight percent silica, about 20 to about 30 weight percent magnesia, greater than 0 to about 0.1 weight percent lithium oxide, greater than 0 to about 1 strontium oxide and a viscosity modifier.

According to certain illustrative embodiments, the inorganic fiber comprises the fiberization product of about 75 to about 80 weight percent silica, about 20 to about 25 weight percent magnesia, about 0.05 to about 0.1 weight percent lithium oxide, greater than 0 to about 1 weight percent strontium oxide and a viscosity modifier.

According to certain illustrative embodiments, the inorganic fiber comprises the fiberization product of about 75 to about 80 weight percent silica, about 20 to about 25 weight percent magnesia, greater than 0 to about 0.1 weight percent lithium oxide, greater than 0 to about 1 strontium oxide and alumina as a viscosity modifier.

According to certain illustrative embodiments, the inorganic fiber comprises the fiberization product of about 75 to about 80 weight percent silica, about 20 to about 25 weight percent magnesia, about 0.05 to about 0.1 weight percent lithium oxide, greater than 0 to about 1 weight percent strontium oxide and alumina as a viscosity modifier.

According to certain illustrative embodiments, the inorganic fiber comprises the fiberization product of about 75 to about 80 weight percent silica, about 20 to about 25 weight percent magnesia, greater than 0 to about 0.1 weight percent lithium oxide, greater than 0 to about 1 weight percent strontium oxide and boria as a viscosity modifier.

According to certain illustrative embodiments, the inorganic fiber comprises the fiberization product of about 75 to about 80 weight percent silica, about 20 to about 25 weight percent magnesia, about 0.05 to about 0.1 weight percent lithium oxide, greater than 0 to about 1 weight percent strontium oxide and boria as a viscosity modifier.

According to certain illustrative embodiments, the inorganic fiber comprises the fiberization product of about 75 to about 80 weight percent silica, about 20 to about 25 weight percent magnesia, greater than 0 to about 0.1 weight percent lithium oxide, greater than 0 to about 1 weight percent strontium oxide and a mixture of alumina and boria as a viscosity modifier.

According to certain illustrative embodiments, the inorganic fiber comprises the fiberization product of about 75 to about 80 weight percent silica, about 20 to about 25 weight percent magnesia, about 0.05 to about 0.1 weight percent lithium oxide, greater than 0 to about 1 weight percent strontium oxide and a mixture of alumina and boria as a viscosity modifier.

According to certain illustrative embodiments, the inorganic fiber comprises the fiberization product of about 75 to about 80 weight percent silica, about 20 to about 30 weight percent magnesia, greater than 0 to about 11 weight percent zirconia, greater than 0 to about 1 weight percent strontium oxide, and greater than 0 to about 0.1 weight percent lithium oxide.

According to certain illustrative embodiments, the inorganic fiber comprises the fiberization product of about 75 to about 80 weight percent silica, about 20 to about 25 weight percent magnesia, greater than 0 to about 11 weight percent zirconia, about 0.05 to about 0.1 weight percent lithium oxide, and greater than 0 to about 1 weight percent strontium oxide.

According to certain illustrative embodiments, the inorganic fiber comprises the fiberization product of about 75 to about 80 weight percent silica, about 20 to about 30 weight percent magnesia, greater than 0 to about 11 weight percent zirconia, greater than 0 to about 1 weight percent strontium oxide, greater than 0 to about 0.1 weight percent lithium oxide and a viscosity modifier.

According to certain illustrative embodiments, the inorganic fiber comprises the fiberization product of about 75 to about 80 weight percent silica, about 20 to about 25 weight percent magnesia, greater than 0 to about 11 weight percent zirconia, about 0.05 to about 0.1 weight percent lithium oxide, greater than 0 to about 1 weight percent strontium oxide and a viscosity modifier.

According to certain illustrative embodiments, the inorganic fiber comprises the fiberization product of about 75 to about 80 weight percent silica, about 20 to about 25 weight percent magnesia, greater than 0 to about 11 weight percent zirconia, about 0.05 to about 0.1 weight percent lithium oxide, greater than 0 to about 1 weight percent strontium oxide and alumina as a viscosity modifier.

According to certain illustrative embodiments, the inorganic fiber comprises the fiberization product of about 75 to about 80 weight percent silica, about 20 to about 25 weight percent magnesia, greater than 0 to about 11 weight percent zirconia, greater than 0 to about 1 weight percent strontium oxide, greater than 0 to about 0.1 weight percent lithium oxide, and boria as a viscosity modifier.

According to certain illustrative embodiments, the inorganic fiber comprises the fiberization product of about 75 to about 80 weight percent silica, about 20 to about 25 weight percent magnesia, greater than 0 to about 11 weight percent zirconia, about 0.05 to about 0.1 weight percent lithium oxide, greater than 0 to about 1 weight percent strontium oxide and boria as a viscosity modifier.

According to certain illustrative embodiments, the inorganic fiber comprises the fiberization product of about 75 to about 80 weight percent silica, about 20 to about 25 weight percent magnesia, greater than 0 to about 1 weight percent strontium oxide, greater than 0 to about 0.1 weight percent lithium oxide, and a mixture of alumina and boria as a viscosity modifier.

According to certain illustrative embodiments, the inorganic fiber comprises the fiberization product of about 75 to about 80 weight percent silica, about 20 to about 25 weight percent magnesia, greater than 0 to about 11 weight percent zirconia, about 0.05 to about 0.1 weight percent lithium oxide, greater than 0 to about 1 weight percent strontium oxide and greater than 0 to about 2 weight percent alumina as a viscosity modifier.

According to certain illustrative embodiments, the inorganic fiber comprises the fiberization product of about 75 to about 80 weight percent silica, about 20 to about 25 weight percent magnesia, greater than 0 to about 11 weight percent zirconia, greater than 0 to about 1 weight percent strontium oxide, greater than 0 to about 0.1 weight percent lithium oxide, and greater than 0 to about 2 weight percent alumina as a viscosity modifier.

According to certain illustrative embodiments, the inorganic fiber comprises the fiberization product of about 75 to about 80 weight percent silica, about 20 to about 25 weight percent magnesia, greater than 0 to about 11 weight percent zirconia, about 0.05 to about 0.1 weight percent lithium oxide, greater than 0 to about 1 weight percent strontium oxide and greater than 0 to about 1 weight percent boria as a viscosity modifier.

According to certain illustrative embodiments, the inorganic fiber comprises the fiberization product of about 75 to about 80 weight percent silica, about 20 to about 25 weight percent magnesia, greater than 0 to about 11 weight percent zirconia, greater than 0 to about 1 weight percent strontium oxide, greater than 0 to about 0.1 weight percent lithium oxide, and greater than 0 to about 1 weight percent boria as a viscosity modifier.

According to certain illustrative embodiments, the inorganic fiber comprises the fiberization product of about 75 to about 80 weight percent silica, about 20 to about 30 weight percent magnesia, greater than 0 to about 1 weight percent strontium oxide, greater than 0 to about 0.1 weight percent lithium oxide, and a mixture of greater than 0 to about 2 weight percent alumina and greater than 0 to about 1 weight percent boria as a viscosity modifier.

According to certain illustrative embodiments, the inorganic fiber comprises the fiberization product of about 75 to about 80 weight percent silica, about 20 to about 25 weight percent magnesia, greater than 0 to about 11 weight percent zirconia, about 0.05 to about 0.1 weight percent lithium oxide, greater than 0 to about 1 weight percent strontium oxide and a mixture of greater than 0 to about 2 weight percent alumina and greater than 0 to about 1 weight percent boria as a viscosity modifier.

According to certain illustrative disclosures, the inorganic fiber comprises the fiberization product of about 75 to about 80 weight percent silica, about 20 to about 25 weight percent magnesia, about 0.0075 to about 0.1 weight percent lithium oxide and greater than 0 to about 2.5 weight percent strontium oxide.

According to certain illustrative embodiments, the inorganic fiber comprises the fiberization product of about 75 to about 80 weight percent silica, about 20 to about 25 weight percent magnesia, about 0.0075 to about 0.1 weight percent lithium oxide and greater than 0 to about 1.75 weight percent strontium oxide.

According to certain illustrative embodiments, the inorganic fiber comprises the fiberization product of about 75 to about 80 weight percent silica, about 20 to about 25 weight percent magnesia, 0.0075 weight percent to about 0.1 weight percent lithium oxide and about 0.1 to about 0.75 weight percent strontium oxide.

According to certain illustrative embodiments, the inorganic fiber comprises the fiberization product of about 75 to about 80 weight percent silica, about 20 to about 25 weight percent magnesia, 0.0075 to about 0.1 weight percent lithium oxide and about 0.1 to about 0.5 weight percent strontium oxide.

According to certain illustrative disclosures, the inorganic fiber comprises the fiberization product of about 75 to about 80 weight percent silica, about 20 to about 25 weight percent magnesia, about 0.009 to about 0.075 weight percent lithium oxide and greater than 0 to about 2.5 weight percent strontium oxide.

According to certain illustrative embodiments, the inorganic fiber comprises the fiberization product of about 75 to about 80 weight percent silica, about 20 to about 25 weight percent magnesia, about 0.009 to about 0.075 weight percent lithium oxide and greater than 0 to about 1.75 weight percent strontium oxide.

According to certain illustrative embodiments, the inorganic fiber comprises the fiberization product of about 75 to about 80 weight percent silica, about 20 to about 25 weight percent magnesia, 0.009 to about 0.075 weight percent lithium oxide and about 0.1 to about 0.75 weight percent strontium oxide.

According to certain illustrative embodiments, the inorganic fiber comprises the fiberization product of about 75 to about 80 weight percent silica, about 20 to about 25 weight percent magnesia, 0.009 to about 0.075 weight percent lithium oxide and about 0.1 to about 0.5 weight percent strontium oxide.

According to certain illustrative disclosures, the inorganic fiber comprises the fiberization product of about 75 to about 80 weight percent silica, about 20 to about 25 weight percent magnesia, about 0.02 to about 0.05 weight percent lithium oxide and greater than 0 to about 2.5 weight percent strontium oxide.

According to certain illustrative embodiments, the inorganic fiber comprises the fiberization product of about 75 to about 80 weight percent silica, about 20 to about 25 weight percent magnesia, about 0.02 to about 0.05 weight percent lithium oxide and greater than 0 to about 1.75 weight percent strontium oxide.

According to certain illustrative embodiments, the inorganic fiber comprises the fiberization product of about 75 to about 80 weight percent silica, about 20 to about 25 weight percent magnesia, 0.02 to about 0.05 weight percent lithium oxide and about 0.1 to about 0.75 weight percent strontium oxide.

According to certain illustrative embodiments, the inorganic fiber comprises the fiberization product of about 75 to about 80 weight percent silica, about 20 to about 25 weight percent magnesia, 0.02 to about 0.05 weight percent lithium oxide and about 0.1 to about 0.5 weight percent strontium oxide.

According to certain illustrative disclosures, the inorganic fiber comprises the fiberization product of about 76 to about 80 weight percent silica, about 20 to about 24 weight percent magnesia, about 0.0075 to about 0.1 weight percent lithium oxide and greater than 0 to about 2.5 weight percent strontium oxide.

According to certain illustrative embodiments, the inorganic fiber comprises the fiberization product of about 76 to about 80 weight percent silica, about 20 to about 24 weight percent magnesia, about 0.0075 to about 0.1 weight percent lithium oxide and greater than 0 to about 1.75 weight percent strontium oxide.

According to certain illustrative embodiments, the inorganic fiber comprises the fiberization product of about 76 to about 80 weight percent silica, about 20 to about 24 weight percent magnesia, 0.0075 weight percent to about 0.1 weight percent lithium oxide and about 0.1 to about 0.75 weight percent strontium oxide.

According to certain illustrative embodiments, the inorganic fiber comprises the fiberization product of about 76 to about 80 weight percent silica, about 20 to about 24 weight percent magnesia, 0.0075 to about 0.1 weight percent lithium oxide and about 0.1 to about 0.5 weight percent strontium oxide.

According to certain illustrative disclosures, the inorganic fiber comprises the fiberization product of about 76 to about 80 weight percent silica, about 20 to about 24 weight percent magnesia, about 0.009 to about 0.075 weight percent lithium oxide and greater than 0 to about 2.5 weight percent strontium oxide.

According to certain illustrative embodiments, the inorganic fiber comprises the fiberization product of about 76 to about 80 weight percent silica, about 20 to about 24 weight percent magnesia, about 0.009 to about 0.075 weight percent lithium oxide and greater than 0 to about 1.75 weight percent strontium oxide.

According to certain illustrative embodiments, the inorganic fiber comprises the fiberization product of about 76 to about 80 weight percent silica, about 20 to about 24 weight percent magnesia, 0.009 to about 0.075 weight percent lithium oxide and about 0.1 to about 0.75 weight percent strontium oxide.

According to certain illustrative embodiments, the inorganic fiber comprises the fiberization product of about 76 to about 80 weight percent silica, about 20 to about 24 weight percent magnesia, 0.009 to about 0.075 weight percent lithium oxide and about 0.1 to about 0.5 weight percent strontium oxide.

According to certain illustrative disclosures, the inorganic fiber comprises the fiberization product of about 76 to about 80 weight percent silica, about 20 to about 24 weight percent magnesia, about 0.02 to about 0.05 weight percent lithium oxide and greater than 0 to about 2.5 weight percent strontium oxide.

According to certain illustrative embodiments, the inorganic fiber comprises the fiberization product of about 76 to about 80 weight percent silica, about 20 to about 24 weight percent magnesia, about 0.02 to about 0.05 weight percent lithium oxide and greater than 0 to about 1.75 weight percent strontium oxide.

According to certain illustrative embodiments, the inorganic fiber comprises the fiberization product of about 76 to about 80 weight percent silica, about 20 to about 24 weight percent magnesia, 0.02 to about 0.05 weight percent lithium oxide and about 0.1 to about 0.75 weight percent strontium oxide.

According to certain illustrative embodiments, the inorganic fiber comprises the fiberization product of about 76 to about 80 weight percent silica, about 20 to about 24 weight percent magnesia, 0.02 to about 0.05 weight percent lithium oxide and about 0.1 to about 0.5 weight percent strontium oxide.

According to certain illustrative disclosures, the inorganic fiber comprises the fiberization product of about 77 to about 80 weight percent silica, about 20 to about 23 weight percent magnesia, about 0.0075 to about 0.1 weight percent lithium oxide and greater than 0 to about 2.5 weight percent strontium oxide.

According to certain illustrative embodiments, the inorganic fiber comprises the fiberization product of about 77 to about 80 weight percent silica, about 20 to about 23 weight percent magnesia, about 0.0075 to about 0.1 weight percent lithium oxide and greater than 0 to about 1.75 weight percent strontium oxide.

According to certain illustrative embodiments, the inorganic fiber comprises the fiberization product of about 77 to about 80 weight percent silica, about 20 to about 23 weight percent magnesia, 0.0075 weight percent to about 0.1 weight percent lithium oxide and about 0.1 to about 0.75 weight percent strontium oxide.

According to certain illustrative embodiments, the inorganic fiber comprises the fiberization product of about 77 to about 80 weight percent silica, about 20 to about 23 weight percent magnesia, 0.0075 to about 0.1 weight percent lithium oxide and about 0.1 to about 0.5 weight percent strontium oxide.

According to certain illustrative disclosures, the inorganic fiber comprises the fiberization product of about 77 to about 80 weight percent silica, about 20 to about 23 weight percent magnesia, about 0.009 to about 0.075 weight percent lithium oxide and greater than 0 to about 2.5 weight percent strontium oxide.

According to certain illustrative embodiments, the inorganic fiber comprises the fiberization product of about 77 to about 80 weight percent silica, about 20 to about 23 weight percent magnesia, about 0.009 to about 0.075 weight percent lithium oxide and greater than 0 to about 1.75 weight percent strontium oxide.

According to certain illustrative embodiments, the inorganic fiber comprises the fiberization product of about 77 to about 80 weight percent silica, about 20 to about 23 weight percent magnesia, 0.009 to about 0.075 weight percent lithium oxide and about 0.1 to about 0.75 weight percent strontium oxide.

According to certain illustrative embodiments, the inorganic fiber comprises the fiberization product of about 77 to about 80 weight percent silica, about 20 to about 23 weight percent magnesia, 0.009 to about 0.075 weight percent lithium oxide and about 0.1 to about 0.5 weight percent strontium oxide.

According to certain illustrative disclosures, the inorganic fiber comprises the fiberization product of about 77 to about 80 weight percent silica, about 20 to about 23 weight percent magnesia, about 0.02 to about 0.05 weight percent lithium oxide and greater than 0 to about 2.5 weight percent strontium oxide.

According to certain illustrative embodiments, the inorganic fiber comprises the fiberization product of about 77 to about 80 weight percent silica, about 20 to about 23 weight percent magnesia, about 0.02 to about 0.05 weight percent lithium oxide and greater than 0 to about 1.75 weight percent strontium oxide.

According to certain illustrative embodiments, the inorganic fiber comprises the fiberization product of about 77 to about 80 weight percent silica, about 20 to about 23 weight percent magnesia, 0.02 to about 0.05 weight percent lithium oxide and about 0.1 to about 0.75 weight percent strontium oxide.

According to certain illustrative embodiments, the inorganic fiber comprises the fiberization product of about 77 to about 80 weight percent silica, about 20 to about 23 weight percent magnesia, 0.02 to about 0.05 weight percent lithium oxide and about 0.1 to about 0.5 weight percent strontium oxide.

According to certain illustrative embodiments, the inorganic fiber comprises the fiberization product of about 72 to about 86 weight percent silica, about 14 to about 28 weight percent magnesia, greater than 0 to about 0.1 weight percent lithium oxide, and greater than 0 to about 1 weight percent strontium oxide.

According to certain illustrative embodiments, the inorganic fiber comprises the fiberization product of about 72 to about 86 weight percent silica, about 14 to about 28 weight percent magnesia, about 0.05 to about 0.1 weight percent lithium oxide and greater than 0 to about 1 weight percent strontium oxide.

According to certain illustrative disclosures, the inorganic fiber comprises the fiberization product of about 72 to about 86 weight percent silica, about 14 to about 28 weight percent magnesia, about 0.05 to about 0.5 weight percent lithium oxide, greater than 0 to about 3 weight percent strontium oxide and a viscosity modifier.

According to certain illustrative embodiments, the inorganic fiber comprises the fiberization product of about 72 to about 86 weight percent silica, about 14 to about 28 weight percent magnesia, about 0.05 to about 0.1 weight percent lithium oxide, greater than 0 to about 1 weight percent strontium oxide and a viscosity modifier.

According to certain illustrative embodiments, the inorganic fiber comprises the fiberization product of about 72 to about 86 weight percent silica, about 14 to about 28 weight percent magnesia, greater than 0 to about 0.1 weight percent lithium oxide, greater than 0 to about 1 strontium oxide and alumina as a viscosity modifier.

According to certain illustrative embodiments, the inorganic fiber comprises the fiberization product of about 72 to about 86 weight percent silica, about 14 to about 28 weight percent magnesia, about 0.05 to about 0.1 weight percent lithium oxide, greater than 0 to about 1 weight percent strontium oxide and alumina as a viscosity modifier.

According to certain illustrative embodiments, the inorganic fiber comprises the fiberization product of about 72 to about 86 weight percent silica, about 14 to about 28 weight percent magnesia, greater than 0 to about 0.1 weight percent lithium oxide, greater than 0 to about 1 weight percent strontium oxide and boria as a viscosity modifier.

According to certain illustrative embodiments, the inorganic fiber comprises the fiberization product of about 72 to about 86 weight percent silica, about 14 to about 28 weight percent magnesia, about 0.05 to about 0.1 weight percent lithium oxide, greater than 0 to about 1 weight percent strontium oxide and boria as a viscosity modifier.

According to certain illustrative disclosures, the inorganic fiber comprises the fiberization product of about 72 to about 86 weight percent silica, about 14 to about 28 weight percent magnesia, greater than 0 to about 1 weight percent lithium oxide, greater than 0 to about 5 weight percent strontium oxide and a mixture of alumina and boria as a viscosity modifier.

According to certain illustrative embodiments, the inorganic fiber comprises the fiberization product of about 72 to about 86 weight percent silica, about 14 to about 28 weight percent magnesia, greater than 0 to about 0.1 weight percent lithium oxide, greater than 0 to about 1 weight percent strontium oxide and a mixture of alumina and boria as a viscosity modifier.

According to certain illustrative embodiments, the inorganic fiber comprises the fiberization product of about 72 to about 86 weight percent silica, about 14 to about 28 weight percent magnesia, about 0.05 to about 0.1 weight percent lithium oxide, greater than 0 to about 1 weight percent strontium oxide and a mixture and alumina and boria as a viscosity modifier.

According to certain illustrative embodiments, the inorganic fiber comprises the fiberization product of about 72 to about 86 weight percent silica, about 14 to about 28 weight percent magnesia, greater than 0 to about 11 weight percent zirconia greater than 0 to about 1 weight percent strontium oxide, and greater than 0 to about 0.1 weight percent lithium oxide.

According to certain illustrative embodiments, the inorganic fiber comprises the fiberization product of about 72 to about 86 weight percent silica, about 14 to about 28 weight percent magnesia, greater than 0 to about 11 weight percent zirconia about 0.05 to about 0.1 weight percent lithium oxide, and greater than 0 to about 1 weight percent strontium oxide.

According to certain illustrative embodiments, the inorganic fiber comprises the fiberization product of about 72 to about 86 weight percent silica, about 14 to about 28 weight percent magnesia, greater than 0 to about 11 weight percent zirconia about 0.05 to about 0.1 weight percent lithium oxide, and greater than 0 to about 1 weight percent strontium oxide and a viscosity modifier.

According to certain illustrative embodiments, the inorganic fiber comprises the fiberization product of about 72 to about 86 weight percent silica, about 14 to about 28 weight percent magnesia, greater than 0 to about 11 weight percent zirconia about 0.05 to about 0.1 weight percent lithium oxide, and greater than 0 to about 1 weight percent strontium oxide and alumina as a viscosity modifier.

According to certain illustrative embodiments, the inorganic fiber comprises the fiberization product of about 72 to about 86 weight percent silica, about 14 to about 28 weight percent magnesia, greater than 0 to about 11 weight percent zirconia, greater than 0 to about 1 weight percent strontium oxide, greater than 0 to about 0.1 weight percent lithium oxide, and boria as a viscosity modifier.

According to certain illustrative embodiments, the inorganic fiber comprises the fiberization product of about 72 to about 86 weight percent silica, about 14 to about 28 weight percent magnesia, greater than 0 to about 11 weight percent zirconia about 0.05 to about 0.1 weight percent lithium oxide, and greater than 0 to about 1 weight percent strontium oxide and boria as a viscosity modifier.

According to certain illustrative embodiments, the inorganic fiber comprises the fiberization product of about 72 to about 86 weight percent silica, about 14 to about 28 weight percent magnesia, greater than 0 to about 1 weight percent strontium oxide, greater than 0 to about 0.1 weight percent lithium oxide and a mixture of alumina and boria as a viscosity modifier.

According to certain illustrative embodiments, the inorganic fiber comprises the fiberization product of about 72 to about 86 weight percent silica, about 14 to about 28 weight percent magnesia, greater than 0 to about 11 weight percent zirconia about 0.05 to about 0.1 weight percent lithium oxide, and greater than 0 to about 1 weight percent strontium oxide and a mixture of alumina and boria as a viscosity modifier.

According to certain illustrative embodiments, the inorganic fiber comprises the fiberization product of about 72 to about 86 weight percent silica, about 14 to about 28 weight percent magnesia, greater than 0 to about 11 weight percent zirconia, greater than 0 to about 1 weight percent strontium oxide, greater than 0 to about 0.1 weight percent lithium oxide, and greater than 0 to about 2 weight percent alumina as a viscosity modifier.

According to certain illustrative embodiments, the inorganic fiber comprises the fiberization product of about 72 to about 86 weight percent silica, about 14 to about 28 weight percent magnesia, greater than 0 to about 11 weight percent zirconia, greater than 0 to about 1 weight percent strontium oxide, greater than 0 to about 0.1 weight percent lithium oxide, and greater than 0 to about 1 weight percent boria as a viscosity modifier.

According to certain illustrative embodiments, the inorganic fiber comprises the fiberization product of about 72 to about 86 weight percent silica, about 14 to about 28 weight percent magnesia, greater than 0 to about 1 weight percent strontium oxide, greater than 0 to about 0.1 weight percent lithium oxide, and a mixture of greater than 0 to about 2 weight percent alumina and greater than 0 to about 1 weight percent boria as a viscosity modifier.

According to certain illustrative embodiments, the inorganic fiber comprises the fiberization product of about 72 to about 86 weight percent silica, about 14 to about 28 weight percent magnesia, about 0.05 to about 0.1 weight percent lithium oxide and greater than 0 to about 1 weight percent strontium oxide.

According to certain illustrative embodiments, the inorganic fiber comprises the fiberization product of about 72 to about 80 weight percent silica, about 20 to about 28 weight percent magnesia, greater than 0 to about 0.1 weight percent lithium oxide, greater than 0 to about 1 strontium oxide and alumina as a viscosity modifier.

According to certain illustrative embodiments, the inorganic fiber comprises the fiberization product of about 72 to about 86 weight percent silica, about 14 to about 28 weight percent magnesia, about 0.05 to about 0.1 weight percent lithium oxide, greater than 0 to about 1 weight percent strontium oxide and alumina as a viscosity modifier.

According to certain illustrative embodiments, the inorganic fiber comprises the fiberization product of about 72 to about 80 weight percent silica, about 20 to about 28 weight percent magnesia, greater than 0 to about 0.1 weight percent lithium oxide, greater than 0 to about 1 weight percent strontium oxide and boria as a viscosity modifier.

According to certain illustrative embodiments, the inorganic fiber comprises the fiberization product of about 72 to about 86 weight percent silica, about 14 to about 28 weight percent magnesia, about 0.05 to about 0.1 weight percent lithium oxide, greater than 0 to about 1 weight percent strontium oxide and boria as a viscosity modifier.

According to certain illustrative embodiments, the inorganic fiber comprises the fiberization product of about 72 to about 80 weight percent silica, about 20 to about 28 weight percent magnesia, greater than 0 to about 0.1 weight percent lithium oxide, greater than 0 to about 1 weight percent strontium oxide and a mixture of alumina and boria as a viscosity modifier.

According to certain illustrative embodiments, the inorganic fiber comprises the fiberization product of about 72 to about 86 weight percent silica, about 14 to about 28 weight percent magnesia, about 0.05 to about 0.1 weight percent lithium oxide, greater than 0 to about 1 weight percent strontium oxide and a mixture of alumina and boria as a viscosity modifier.

According to certain illustrative embodiments, the inorganic fiber comprises the fiberization product of about 72 to about 80 weight percent silica, about 20 to about 28 weight percent magnesia, greater than 0 to about 11 weight percent zirconia greater than 0 to about 1 weight percent strontium oxide and greater than 0 to about 0.1 weight percent lithium oxide.

According to certain illustrative embodiments, the inorganic fiber comprises the fiberization product of about 72 to about 86 weight percent silica, about 14 to about 28 weight percent magnesia, greater than 0 to about 11 weight percent zirconia about 0.05 to about 0.1 weight percent lithium oxide, greater than 0 to about 1 weight percent strontium oxide.

According to certain illustrative embodiments, the inorganic fiber comprises the fiberization product of about 72 to about 80 weight percent silica, about 20 to about 28 weight percent magnesia, greater than 0 to about 11 weight percent zirconia, greater than 0 to about 1 weight percent strontium oxide, greater than 0 to about 0.1 weight percent lithium oxide and a viscosity modifier.

According to certain illustrative embodiments, the inorganic fiber comprises the fiberization product of about 72 to about 80 weight percent silica, about 20 to about 28 weight percent magnesia, greater than 0 to about 11 weight percent zirconia, greater than 0 to about 1 weight percent strontium oxide, greater than 0 to about 0.1 weight percent lithium oxide, and alumina as a viscosity modifier.

According to certain illustrative embodiments, the inorganic fiber comprises the fiberization product of about 72 to about 80 weight percent silica, about 20 to about 28 weight percent magnesia, greater than 0 to about 11 weight percent zirconia, greater than 0 to about 1 weight percent strontium oxide, greater than 0 to about 0.1 weight percent lithium oxide and boria as a viscosity modifier.

According to certain illustrative embodiments, the inorganic fiber comprises the fiberization product of about 72 to about 80 weight percent silica, about 20 to about 28 weight percent magnesia, greater than 0 to about 1 weight percent strontium oxide, greater than 0 to about 0.1 weight percent lithium oxide, and a mixture of alumina and boria as a viscosity modifier.

According to certain illustrative embodiments, the inorganic fiber comprises the fiberization product of about 72 to about 80 weight percent silica, about 20 to about 28 weight percent magnesia, greater than 0 to about 11 weight percent zirconia, greater than 0 to about 1 weight percent strontium oxide, greater than 0 to about 0.1 weight percent lithium oxide and greater than 0 to about 2 weight percent alumina as a viscosity modifier.

According to certain illustrative embodiments, the inorganic fiber comprises the fiberization product of about 72 to about 80 weight percent silica, about 20 to about 28 weight percent magnesia, greater than 0 to about 11 weight percent zirconia, greater than 0 to about 1 weight percent strontium oxide, greater than 0 to about 0.1 weight percent lithium oxide and greater than 0 to about 1 weight percent boria as a viscosity modifier.

According to certain illustrative embodiments, the inorganic fiber comprises the fiberization product of about 72 to about 80 weight percent silica, about 20 to about 28 weight percent magnesia, greater than 0 to about 1 weight percent strontium oxide, greater than 0 to about 0.1 weight percent lithium oxide, and a mixture of greater than 0 to about 2 weight percent alumina and greater than 0 to about 1 weight percent boria as a viscosity modifier.

According to any of the above illustrative embodiments, the inorganic fiber may contain 1 weight percent or less calcia. According to any of the above illustrative embodiments, the inorganic fiber may contain 0.5 weight percent or less calcia. According to any of the above illustrative embodiments, the inorganic fiber may contain 0.3 weight percent or less calcia.

According to any of the above embodiments, the inorganic fiber may contain substantially no alkali metal oxide.

According to any of the above embodiments, provided is a high temperature resistant inorganic fiber which exhibits a linear shrinkage of 5% or less when exposed a use temperature of 1260°C and greater, and which maintains mechanical integrity after exposure to the use temperature, and which exhibits low biopersistence in physiological fluids.

According to any of the above embodiments, the high temperature resistant inorganic fiber exhibits a linear shrinkage of 4% or less when exposed a use temperature of 1260°C and greater, maintains mechanical integrity after exposure to the use temperature, and which exhibits low biopersistence in physiological fluids.

According to any of the above embodiments, provided is a high temperature resistant inorganic fiber which exhibits a linear shrinkage of 5% or less when exposed a use temperature of 1400°C or greater, and which maintains mechanical integrity after exposure to the use temperature, and which exhibits low biopersistence in physiological fluids.

According to any of the above embodiments, the high temperature resistant inorganic fiber exhibits a linear shrinkage of 4% or less when exposed a use temperature of 1400°C or greater, and which maintains mechanical integrity after exposure to the use temperature, and exhibit low biopersistence in physiological fluids.

According to any of the above embodiments, provided is a method for preparing a high temperature resistant inorganic fiber having a use temperature of 1260°C or greater, which maintains mechanical integrity after exposure to the use temperature, and which exhibits low biopersistence in physiological fluids.

A specific illustrative embodiment of the inorganic fiber comprises about 80 weight percent silica, about 17.95 weight percent, about 0.5 weight percent strontium oxide, about 0.06 weight percent lithium oxide, about 1.5 weight percent alumina.

According to certain illustrative disclosures, the method for preparing the fiber comprises forming a melt with ingredients comprising either or silica and magnesia, or silica and calcia, or silica, magnesia and calcium, and greater than 0 to about 0.1 weight percent lithium oxide, greater than 0 to about 3 weight percent strontium oxide, optionally greater than 0 to 11 weight percent zirconia, and optionally a viscosity modifier; and producing fibers from the melt.

The method for preparing the fiber comprises forming a melt with ingredients comprising either (i) silica and magnesia, or (ii) silica and calcia, or (iii) silica, magnesia and calcia, and greater than 0 to about 0.1 weight percent lithium oxide, greater than 0 to about 1 weight percent strontium oxide, optionally greater than 0 to 11 weight percent zirconia, and optionally a viscosity modifier; and producing fibers from the melt.

According to certain illustrative disclosures, the method for preparing the fiber comprises forming a melt with ingredients comprising from about 65 to about 86 weight percent silica, from about 14 to about 35 weight percent magnesia, and greater than 0 to about 0.1 weight percent lithium oxide, greater than 0 to about 3 weight percent strontium oxide, optionally greater than 0 to 11 weight percent zirconia, and optionally a viscosity modifier; and producing fibers from the melt.

According to certain illustrative embodiments, the method for preparing the fiber comprises forming a melt with ingredients comprising from about 65 to about 86 weight percent silica, from about 14 to about 35 weight percent magnesia, and greater than 0 to about 0.1 weight percent lithium oxide, greater than 0 to about 1 weight percent strontium oxide, optionally greater than 0 to 11 weight percent zirconia, and optionally a viscosity modifier; and producing fibers from the melt.

According to certain illustrative disclosures, the method for preparing the fiber comprises forming a melt with ingredients comprising from about 70 to about 80 weight percent silica, from about 20 to about 30 weight percent magnesia, and greater than 0 to about 0.1 weight percent lithium oxide, greater than 0 to about 3 weight percent strontium oxide, optionally greater than 0 to 11 weight percent zirconia, and optionally a viscosity modifier; and producing fibers from the melt.

According to certain illustrative embodiments, the method for preparing the fiber comprises forming a melt with ingredients comprising from about 70 to about 80 weight percent silica, from about 20 to about 30 weight percent magnesia, and greater than 0 to about 0.1 weight percent lithium oxide, greater than 0 to about 1 weight percent strontium oxide, optionally greater than 0 to 11 weight percent zirconia, and optionally a viscosity modifier; and producing fibers from the melt.

According to certain illustrative embodiments, the method for preparing the fiber comprises forming a melt with ingredients comprising from about 75 to about 80 weight percent silica, from about 20 to about 25 weight percent magnesia, and greater than 0 to about 0.1 weight percent lithium oxide, greater than 0 to about 2 weight percent strontium oxide, optionally greater than 0 to 11 weight percent zirconia, and optionally a viscosity modifier; and producing fibers from the melt.

According to certain illustrative embodiments, the method for preparing the fiber comprises forming a melt with ingredients comprising from about 75 to about 80 weight percent silica, from about 20 to about 25 weight percent magnesia, and greater than 0 to about 0.1 weight percent lithium oxide, greater than 0 to about 2 weight percent strontium oxide, optionally greater than 0 to 11 weight percent zirconia, and optionally a viscosity modifier; and producing fibers from the melt.

According to certain illustrative disclosures, the method for preparing the fiber comprises forming a melt with ingredients comprising from about 72 to about 86 weight percent silica, from about 14 to about 28 weight percent magnesia, and greater than 0 to about 0.1 weight percent lithium oxide, greater than 0 to about 3 weight percent strontium oxide, optionally greater than 0 to 11 weight percent zirconia, and optionally a viscosity modifier; and producing fibers from the melt.

According to certain illustrative embodiments, the method for preparing the fiber comprises forming a melt with ingredients comprising from about 72 to about 86 weight percent silica, from about 14 to about 28 weight percent magnesia, and greater than 0 to about 0.1 weight percent lithium oxide, greater than 0 to about 2 weight percent strontium oxide, optionally greater than 0 to 11 weight percent zirconia, and optionally a viscosity modifier; and producing fibers from the melt.

According to certain illustrative disclosures, the method for preparing the fiber comprises forming a melt with ingredients comprising from about 72 to about 80 weight percent silica, about 20 to about 28 weight percent magnesia, and greater than 0 to about 0.1 weight percent lithium oxide, greater than 0 to about 3 weight percent strontium oxide, optionally greater than 0 to 11 weight percent zirconia, and optionally a viscosity modifier; and producing fibers from the melt.

According to certain illustrative embodiments, the method for preparing the fiber comprises forming a melt with ingredients comprising from about 72 to about 80 weight percent silica, about 20 to about 28 weight percent magnesia, and greater than 0 to about 0.1 weight percent lithium oxide, greater than 0 to about 2 weight percent strontium oxide, optionally greater than 0 to 11 weight percent zirconia, and optionally a viscosity modifier; and producing fibers from the melt.

Without limitation, the viscosity modifier that is added to the melt of ingredients to prepare the inorganic fiber may be selected from alumina, boria, and mixtures of alumina and boria. The viscosity modifier is included in the melt of ingredients in an amount effective render the melt fiberizable.

Also provided is a method of thermally insulating an article with fibrous insulation prepared from a plurality of the presently disclosed high temperature resistant low biopersistent inorganic fibers of any of the above disclosed illustrative embodiments and disclosures. The method includes disposing on, in, near or around the article to be thermally insulated, a thermal insulation material comprising a plurality of the inorganic fibers comprising the fiberization product of either or silica and magnesia, or silica and calcia, or silica, magnesia and calcium, and greater than 0 to about 1 weight percent lithium oxide, greater than 0 to about 5 weight percent strontium oxide, optionally greater than 0 to 11 weight percent zirconia, and optionally a viscosity modifier.

According to certain illustrative embodiments, the method of thermally insulating an article with fibrous insulation comprising a plurality fibers comprising the fiberization product of from about 65 to about 86 weight percent silica, from about 14 to about 36 weight percent magnesia, and greater than 0 to about 0.1 weight percent lithium oxide, greater than 0 to about 2 weight percent strontium oxide, optionally greater than 0 to 11 weight percent zirconia, and optionally a viscosity modifier; and producing fibers from the melt.

According to certain illustrative embodiments, the method of thermally insulating an article with fibrous insulation comprising a plurality fibers comprising the fiberization product of from about 75 to about 80 weight percent silica, from about 20 to about 30 weight percent magnesia, and greater than 0 to about 0.1 weight percent lithium oxide, greater than 0 to about 2 weight percent strontium oxide, optionally greater than 0 to 11 weight percent zirconia, and optionally a viscosity modifier; and producing fibers from the melt.

According to certain illustrative embodiments, the method of thermally insulating an article with fibrous insulation comprising a plurality fibers comprising the fiberization product of from about 72 to about 86 weight percent silica, from about 14 to about 28 weight percent magnesia, and greater than 0 to about 0.1 weight percent lithium oxide, greater than 0 to about 2 weight percent strontium oxide, optionally greater than 0 to 11 weight percent zirconia, and optionally a viscosity modifier; and producing fibers from the melt.

According to certain illustrative embodiments, the method of thermally insulating an article with fibrous insulation comprising a plurality fibers comprising the fiberization product of from about 72 to about 80 weight percent silica, about 20 to about 28 weight percent magnesia, and greater than 0 to about 0.1 weight percent lithium oxide, greater than 0 to about 2 weight percent strontium oxide, optionally greater than 0 to 11 weight percent zirconia, and optionally a viscosity modifier; and producing fibers from the melt.

Also provided is an inorganic fiber containing article comprising a plurality of the inorganic fibers disclosed herein above in the form of blankets, blocks, boards, caulking compositions, cement compositions, coatings, felts, mats, moldable compositions, modules, papers, pumpable compositions, putty compositions, sheets, tamping mixtures, vacuum cast shapes, vacuum cast forms, or woven textiles (for example, braids, cloths, fabrics, ropes, tapes, sleeving, wicking).

In order for a glass composition to be a viable candidate for producing a satisfactory high temperature resistant fiber product, the fiber to be produced must be manufacturable, sufficiently soluble (ie, having low biopersistence) in physiological fluids, and capable of surviving high temperatures with minimal shrinkage and minimal loss of mechanical integrity during exposure to the high service temperatures.

The present inorganic fiber exhibits low biopersistence in physiological fluids. By "low biopersistence" in physiological fluids, it is meant that the inorganic fiber at least partially dissolves in such fluids, such as simulated lung fluid, during in vitro tests.

Biopersistence may be tested by measuring the rate at which mass is lost from the fiber (ng/cm²-hr) under conditions which simulate the temperature and chemical conditions found in the human lung. This test consists of exposing approximately 0.1g of de-shotted fiber to 50 ml of simulated lung fluid (SLF) for 6 hours. The entire test system is maintained at 37°C, to simulate the temperature of the human body.

After the SLF has been exposed to the fiber, it is collected and analyzed for glass constituents using Inductively Coupled Plasma Spectroscopy. A "blank" SLF sample is also measured and used to correct for elements present in the SLF. Once this data has been obtained, it is possible to calculate the rate at which the fiber has lost mass over the time interval of the study. The fibers are significantly less biopersistent than normal refractory ceramic fiber in simulated lung fluid.

"Viscosity" refers to the ability of a glass melt to resist flow or shear stress. The viscosity-temperature relationship is critical in determining whether it is possible to fiberize a given glass composition. An optimum viscosity curve would have a low viscosity (5-50 poise) at the fiberization temperature and would gradually increase as the temperature decreased. If the melt is not sufficiently viscous (i.e. too thin) at the fiberization temperature, the result is a short, thin fiber, with a high proportion of unfiberized material (shot). If the melt is too viscous at the fiberization temperature, the resulting fiber will be extremely coarse (high diameter) and short.

Viscosity is dependent upon melt chemistry, which is also affected by elements or compounds that act as viscosity modifiers. Viscosity modifiers permit fibers to be blown or spun from the fiber melt. It is desirable, however, that such viscosity modifiers, either by type or amount, do not adversely impact the solubility, shrink resistance, or mechanical strength of the blown or spun fiber.

One approach to testing whether a fiber of a defined composition can be readily manufactured at an acceptable quality level is to determine whether the viscosity curve of the experimental chemistry matches that of a known product which can be easily fiberized. Viscosity-temperature profiles may be measured on a viscometer, capable of operating at elevated temperatures. In addition, an adequate viscosity profile may be inferred by routine experimentation, examining the quality of fiber (index, diameter, length) produced. The shape of the viscosity vs. temperature curve for a glass composition is representative of the ease with which a melt will fiberize and thus, of the quality of the resulting fiber (affecting, for example, the fiber's shot content, fiber diameter, and fiber length). Glasses generally have low viscosity at high temperatures. As temperature decreases, the viscosity increases. The value of the viscosity at a given temperature will vary as a function of the composition, as will the overall steepness of the viscosity vs. temperature curve. The present fiber melt composition possesses a viscosity profile of a readily manufacturable fiber.

Linear shrinkage of an inorganic fiber is a good measure of a fiber's dimensional stability at high temperatures or of its performance at a particular continuous service or use temperature. Fibers are tested for shrinkage by forming them into a mat and needle punching the mat together into a blanket of approximately 4-10 pounds per cubic foot density and a thickness of about 1 inch. Such pads are cut into 3 inch x 5 inch pieces and platinum pins are inserted into the face of the material. The separation distance of these pins is then carefully measured and recorded. The pad is then placed into a furnace, ramped to temperature and held at the temperature for a fixed period of time. After heating, the pin separation is again measured to determine the linear shrinkage that pad has experienced.

In one such test, the length and width of the fiber pieces were carefully measured, and the pad was placed in a furnace and brought to a temperature of 1260°C or 1400°C for 24 or 168 hours. After cooling, the lateral dimensions were measured and the linear shrinkage was determined by comparing "before" and "after" measurements. If the fiber is available in blanket form, measurements may be made directly on the blanket without the need to form a pad.

Mechanical integrity is also an important property since the fiber must support its own weight in any application and must also be able to resist abrasion due to moving air or gas. Indications of fiber integrity and mechanical strength are provided by visual and tactile observations, as well as mechanical measurement of these properties of after-service temperature exposed fibers. The ability of the fiber to maintain its integrity after exposure to the use temperature may also be measured mechanically by testing for compression strength and compression recovery. These tests measure, respectively, how easily the pad may be deformed and the amount of resiliency (or compression recovery) the pad exhibits after a compression of 50%. Visual and tactile observations indicate that the present inorganic fiber remains intact and maintains its form after exposure to a use temperature of at least 1260°C or 1400°C.

According to certain embodiments, the low shrinkage, high temperature resistant inorganic fiber comprises the fiberization product of a melt containing magnesia and silica as the primary constituents. The low biopersistent inorganic fibers are made by standard glass and ceramic fiber manufacturing methods. Raw materials, such as silica, any suitable source of magnesia such as enstatite, forsterite, magnesia, magnesite, calcined magnesite, magnesium zirconate, periclase, steatite, or talc. Strontium may be included in the fiber melt as SrO and/or SrCO₃. Lithium may be included in the fiber melt as Li₂CO₃. If zirconia is included in the fiber melt, any suitable source of zirconia such as baddeleyite, magnesium zirconate, zircon or zirconia, are introduced into a suitable furnace where they are melted and blown using a fiberization nozzle, or spun, either in a batch or a continuous mode.

An inorganic fiber comprising the fiberization product of magnesia and silica is referred to as a "magnesium-silicate" fiber. An inorganic fiber comprising the fiberization product of calcia, magnesia and silica is referred to as a "calcia-magnesium-silicate" fiber. An inorganic fiber comprising the fiberization product of calcia and silica is referred to as a "calcium-silicate" fiber. The low shrinkage, high temperature resistant inorganic fiber also comprises a strontium oxide-bearing raw material component and a lithium oxide-bearing raw material component as part of the fiber melt chemistry.

According to certain embodiments, the present inorganic fiber has an average diameter of greater than 2 microns. According to certain embodiments, the present inorganic fiber has an average diameter of greater than 2 microns to about 7.5 microns. According to certain embodiments, the present inorganic fiber has an average diameter of about 3.5 to about 7 microns.

According to certain embodiments, the present inorganic fiber exhibits low shrinkage and good mechanical strength at temperatures from about 1100°C to about 1500°C and low biopersistence.

According to certain embodiments, the present inorganic fiber exhibits low shrinkage and good mechanical strength at temperatures from about 1260°C to about 1500°C and low biopersistence.

According to certain embodiments, the present inorganic fiber exhibits low shrinkage and good mechanical strength at temperatures from about 1260°C to about 1400°C and low biopersistence.

According to certain embodiments, the present inorganic fiber exhibits low shrinkage and good mechanical strength at temperatures from about 1400°C to about 1500°C and low biopersistence.

In addition to magnesia, silica, lithium oxide and strontium oxide, the magnesium-silicate fibers may contain calcia impurity. In certain embodiments, the fiber does not contain more than about 1 weight percent calcia impurity. In other embodiments, the fiber contains less than 0.5 weight percent calcia impurity. In other embodiments, the fiber contains less than 0.3 weight percent calcia.

The magnesium-silicate fibers containing intended additions of lithium oxide and strontium oxide exhibit a linear shrinkage after exposure to a service temperature of 1400°C for 24 hours of 10 percent or less. In other embodiments, the magnesium-silicate fibers containing intended additions of lithium oxide and strontium oxide exhibit a linear shrinkage after exposure to a service temperature of 1400°C for 24 hours of 5 percent or less. In other embodiments, the magnesium-silicate fibers containing intended additions of lithium oxide and strontium oxide exhibit a linear shrinkage after exposure to a service temperature of 1400°C for 24 hours of 4 percent or less.

The inorganic fibers containing intended additions of lithium oxide and strontium oxide addition are useful for thermal insulating applications at continuous service or operating temperatures of at least 1260°C and greater. According to certain embodiments and disclosures, the fibers containing lithium oxide and strontium oxide are useful for thermal insulating applications at continuous service or operating temperatures of at least 1400°C and it has been found that the magnesium-silicate fibers containing the strontium oxide and lithium oxide additions do not melt until they are exposed to a temperature of 1500°C or greater.

The inorganic fibers may be prepared by fiber blowing or fiber spinning techniques. A suitable fiber blowing technique includes the steps of mixing the starting raw materials containing magnesia, silica, lithium oxide, strontium oxide, viscosity modifier, and optional zirconia together to form a material mixture of ingredients, introducing the material mixture of ingredients into a suitable vessel or container, melting the material mixture of ingredients for discharge through a suitable nozzle, and blowing a high pressure gas onto the discharged flow of molten material mixture of ingredients to form the fibers.

A suitable fiber spinning technique includes the steps of mixing the starting raw materials together to form a material mixture of ingredients, introducing the material mixture of ingredients into a suitable vessel or container, melting the material mixture of ingredients for discharge through a suitable nozzle onto spinning wheels. The molten stream then cascades over the wheels, coating the wheels and being thrown off through centripetal forces, thereby forming fibers.

In some embodiments, the fiber is produced from a melt of raw materials by subjecting the molten stream to a jet of high pressure/high velocity air or by pouring the melt onto rapidly spinning wheels and spinning fiber centrifugally. The strontium oxide and lithium oxide are provided as an additive to the melt, and a suitable source of the strontium oxide and lithium oxide raw material is simply added at the proper amount to the raw materials being melted.

The addition of lithium oxide and strontium oxide as components of the raw materials which are fiberized results in a decrease of linear shrinkage of the resulting fiber after exposure to the use temperature. The lithium oxide and strontium oxide may also be provided as either a continuous or discontinuous coating on the outer surfaces of the inorganic fibers.

In addition to the strontium oxide-bearing and lithium oxide-bearing compounds, the viscosity of the material melt of ingredients may optionally be controlled by the presence of viscosity modifiers, in an amount sufficient to provide the fiberization required for the desired applications. The viscosity modifiers may be present in the raw materials which supply the main components of the melt, or may, at least in part, be separately added. Desired particle size of the raw materials is determined by furnacing conditions, including furnace size (SEF), pour rate, melt temperature, residence time, and the like.

The fiber may be manufactured with existing fiberization technology and formed into multiple thermal insulation product forms, including but not limited to bulk fibers, fiber-containing blankets, boards, papers, felts, mats, blocks, modules, coatings, cements, moldable compositions, pumpable compositions, putties, ropes, braids, wicking, textiles (such as cloths, tapes, sleeving, string, yarns, etc...), vacuum cast shapes and composites. The fiber may be used in combination with conventional materials utilized in the production of fiber-containing blankets, vacuum cast shapes and composites, as a substitute for conventional refractory ceramic fibers. The fiber may be used alone or in combination with other materials, such as binders and the like, in the production of fiber-containing paper and felt.

The fiber may be easily melted by standard glass furnacing methods, fiberized by standard RCF fiberization equipment, and is soluble in simulated body fluids.

A method of insulating an article using a thermal insulation containing the disclosed inorganic fibers is also provided. The method of insulating an article includes disposing on, in, near, or around the article to be insulated, a thermal insulation material that contains the inorganic fibers containing an intended strontium oxide and lithium oxide addition.

The high temperature resistant inorganic fibers are readily manufacturable from a melt having a viscosity suitable for blowing or spinning fiber, are non-durable in physiological fluids, exhibit good mechanical strength up to the service temperature, exhibit excellent linear shrinkage up to 1400°C and above and improved viscosity for fiberization.

### EXAMPLES

The following examples are set forth to describe illustrative embodiments of the inorganic fibers containing lithium oxide and strontium oxide addition in further detail and to illustrate the methods of preparing the inorganic fibers, preparing thermal insulating articles containing the fibers and using the fibers as thermal insulation. However, the examples should not be construed as limiting the fiber, the fiber containing articles, or the processes of making or using the fibers as thermal insulation in any manner.

### Linear Shrinkage

A shrinkage pad was prepared by needling a fiber mat using a bank of felting needles. A 3 inch x 5 inch test piece was cut from the pad and was used in the shrinkage testing. The length and width of the test pad was carefully measured. The test pad was then placed into a furnace and brought to a temperature of 1400°C for 24 hours. After heating for 24 hours, the test pad was removed from the test furnace and cooled. After cooling, the length and width of the test pad were measured again. The linear shrinkage of the test pad was determined by comparing the "before" and "after" dimensional measurements.

A second shrinkage pad was prepared in a manner similar to that disclosed for the first shrinkage pad. However, the second shrinkage pad was placed in a furnace and brought to a temperature of 1260°C for 24 hours. After heating for 24 hours, the test pad was removed from the test furnace and cooled. After cooling, the length and width of the test pad were measured again. The linear shrinkage of the test pad was determined by comparing the "before" and "after" dimensional measurements.

### Compression Recovery

The ability of the inorganic fibers to retain mechanical strength after exposure to a use temperature was evaluated by a compression recovery test. Compression recovery is a measure of the mechanical performance of an inorganic fiber in response to the exposure of the fiber to a desired use temperature for a given period of time. Compression recovery is measured by firing test pads manufactured from the inorganic fiber material to the test temperature for the selected period of time. The fired test pads are thereafter compressed to half of their original thickness and allowed to rebound. The amount of rebound is measured as percent recovery of the compressed thickness of the pad. Compression recovery was measured after exposure to use temperatures of 1260°C for 24 hours and 168 hours, and 1400°C for 24 hours and 168 hours. According to certain illustrative embodiments, the test pads manufactured from the inorganic fibers exhibit a compression recovery of at least 10 percent after exposure to a temperature of 1260°C for 24 hours. According to certain illustrative embodiments, the test pads manufactured from the inorganic fibers exhibit a compression recovery of at least 20 percent after exposure to a temperature of 1260°C for 24 hours. According to certain illustrative embodiments, the test pads manufactured from the inorganic fibers exhibit a compression recovery of at least 30 percent after exposure to a temperature of 1260°C for 24 hours. According to certain illustrative embodiments, the test pads manufactured from the inorganic fibers exhibit a compression recovery of at least 40 percent after exposure to a temperature of 1260°C for 24 hours. According to certain illustrative embodiments, the test pads manufactured from the inorganic fibers exhibit a compression recovery of at least 50 percent after exposure to a temperature of 1260°C for 24 hours. According to certain illustrative embodiments, the test pads manufactured from the inorganic fibers exhibit a compression recovery of at least 10 percent after exposure to a temperature of 1260°C for 168 hours. According to certain illustrative embodiments, the test pads manufactured from the inorganic fibers exhibit a compression recovery of at least 20 percent after exposure to a temperature of 1260°C for 168 hours. According to certain illustrative embodiments, the test pads manufactured from the inorganic fibers exhibit a compression recovery of at least 30 percent after exposure to a temperature of 1260°C for 168 hours. According to certain illustrative embodiments, the test pads manufactured from the inorganic fibers exhibit a compression recovery of at least 10 percent after exposure to a temperature of 1400°C for 24 hours. According to certain illustrative embodiments, the test pads manufactured from the inorganic fibers exhibit a compression recovery of at least 20 percent after exposure to a temperature of 1400°C for 24 hours. According to certain illustrative embodiments, the test pads manufactured from the inorganic fibers exhibit a compression recovery of at least 30 percent after exposure to a temperature of 1400°C for 24 hours. According to certain illustrative embodiments, the test pads manufactured from the inorganic fibers exhibit a compression recovery of at least 40 percent after exposure to a temperature of 1400°C for 24 hours.

### Fiber Dissolution

The inorganic fiber is non-durable or non-biopersistent in physiological fluids. By "non-durable" or "non-biopersistent" in physiological fluids it is meant that the inorganic fiber at least partially dissolves or decomposes in such fluids, such as simulated lung fluid, during in vitro tests described herein.

The biopersistence test measures the rate at which mass is lost from the fiber (ng/cm²-hr) under conditions which simulate the temperature and chemical conditions found in the human lung. In particular, the fibers exhibit low biopersistence in Simulated Lung Fluid at a pH of 7.4.

To measure the dissolution rate of fibers in simulated lung fluid, approximately 0.1g of fiber is placed into a 50 ml centrifuge tube containing simulated lung fluid which has been warmed to 37°C. This is then placed into a shaking incubator for 6 hours and agitated at 100 cycles per minute. At the conclusion of the test, the tube is centrifuged and the solution is poured into a 60 ml syringe. The solution is then forced through a 0.45 µm filter to remove any particulate and tested for glass constituents using Inductively Coupled Plasma Spectroscopy analysis. This test may be conducted using either a near-neutral pH solution or an acidic solution. Although no specific dissolution rate standards exist, fibers with dissolution values in excess of 100 ng/cm2 hr are considered indicative of a non-biopersistent fiber.

Table I shows fiber melt chemistries for various comparative and inventive fiber samples.

**TABLE I**

| Example | SiO2 | MgO | Al2O3 | CaO | Fe2O3 | SrO | Li2O |
|---|---|---|---|---|---|---|---|
| | wt% | wt% | wt% | wt% | wt% | wt% | wt% |
| C1 | 78.62 | 19.90 | 1.23 | 0.15 | 0.10 | 0 | 0 |
| C2 | 78.68 | 19.89 | 1.19 | 0.15 | 0.10 | 0 | 0 |
| C3 | 78.19 | 20.34 | 1.19 | 0.16 | 0.10 | 0.02 | 0 |
| 4 | 77.83 | 20.56 | 1.24 | 0.16 | 0.10 | 0.11 | 0.01 |
| 5 | 77.91 | 20.37 | 1.19 | 0.16 | 0.10 | 0.26 | 0.02 |
| 6 | 77.53 | 20.58 | 1.17 | 0.16 | 0.09 | 0.47 | 0.04 |
| 7 | 77.29 | 20.73 | 1.15 | 0.15 | 0.10 | 0.59 | 0.05 |
| 8 | 77.17 | 20.72 | 1.14 | 0.15 | 0.09 | 0.73 | 0.07 |
| 9 | 76.88 | 20.83 | 1.16 | 0.15 | 0.10 | 0.90 | 0.07 |
| 10 | 76.98 | 20.82 | 1.15 | 0.15 | 0.10 | 0.81 | 0.08 |
| 11 | 77.04 | 20.62 | 1.14 | 0.15 | 0.10 | 0.96 | 0.08 |
| 12 | 77.26 | 20.34 | 1.20 | 0.15 | 0.10 | 0.97 | 0.08 |
| C13 | 56.3 | 0 | 43.6 | 0 | 0 | 0 | 0 |
| C14 | 80.05 | 18.6 | 1.13 | 0.15 | 0.07 | 0 | 0 |
| 15 | 79.18 | 19.24 | 1.24 | 0.15 | 0.10 | 0.10 | 0.05 |
| 16 | 79.10 | 18.91 | 1.30 | 0.15 | 0.10 | 0.44 | 0.05 |
| 17 | 77.01 | 20.45 | 1.21 | 0.15 | 0.10 | 1.10 | 0.08 |
| 18 | 76.06 | 21.04 | 1.20 | 0.15 | 0.11 | 1.44 | 0.09 |
| 19 | 75.45 | 21.17 | 1.19 | 0.16 | 0.11 | 1.97 | 0.11* |
| 20 | 75.40 | 20.97 | 1.20 | 0.15 | 0.12 | 2.22 | 0.12* |
| C21 | 80.19 | 18.45 | 1.13 | 0.15 | 0.07 | 0 | 0 |
| C22 | 80.1 | 18.4 | 1.3 | 0.15 | 0.11 | 0.005 | 0 |
| 23 | 79.3 | 19.1 | 1.3 | 0.14 | 0.11 | 0.034 | 0.012 |
| 24 | 79.1 | 19.3 | 1.3 | 0.15 | 0.11 | 0.028 | 0.019 |
| 25 | 79.4 | 19 | 1.3 | 0.15 | 0.11 | 0.053 | 0.020 |
| 26 | 79.5 | 18.9 | 1.3 | 0.14 | 0.11 | 0.069 | 0.027 |
| 27 | 79.1 | 19.3 | 1.3 | 0.14 | 0.11 | 0.062 | 0.024 |
| 28 | 79.2 | 19.1 | 1.3 | 0.14 | 0.12 | 0.078 | 0.031 |
| 29 | 78.5 | 19.8 | 1.3 | 0.15 | 0.12 | 0.087 | 0.034 |
| 30 | 80.1 | 18.2 | 1.3 | 0.14 | 0.11 | 0.099 | 0.040 |
| 31 | 79.4 | 19 | 1.3 | 0.14 | 0.11 | 0.11 | 0.045 |
| 32 | 79 | 19.4 | 1.2 | 0.14 | 0.11 | 0.12 | 0.050 |
| 33 | 79 | 19.4 | 1.3 | 0.14 | 0.11 | 0.12 | 0.049 |
| 34 | 79.4 | 19 | 1.3 | 0.13 | 0.11 | 0.13 | 0.053 |
| 35 | 78.3 | 20 | 1.3 | 0.15 | 0.11 | 0.13 | 0.052 |
| 36 | 79 | 19.3 | 1.3 | 0.14 | 0.10 | 0.14 | 0.056 |
| 37 | 79.6 | 18.8 | 1.2 | 0.15 | 0.10 | 0.13 | 0.052 |
| 38 | 79 | 19.4 | 1.2 | 0.15 | 0.10 | 0.13 | 0.053 |
| 39 | 79.6 | 18.8 | 1.2 | 0.15 | 0.11 | 0.14 | 0.057 |
| *not according to the invention | | | | | | | |

Table II shows the median fiber diameter for the fibers of Table I, and the thickness (inches) and density (pcf) of a blanket prepared from the fibers.

**TABLE II**

| Example | Blanket | Blanket | |
|---|---|---|---|
| | Thickness | **Density** | Median |
| | Inches | **pcf** | micron |
| C1 | 1.2 | 7.7 | 4.22 |
| C2 | 1.2 | 7.6 | 6.08 |
| C3 | 1.2 | 8.3 | 4.98 |
| 4 | 1.3 | 7.4 | 5.34 |
| 5 | 1.2 | 7 | 5.89 |
| 6 | 1.2 | 7.2 | 5.36 |
| 7 | 1.2 | 7.2 | 5 |
| 8 | 1.2 | 6.9 | 4.99 |
| 9 | 1.2 | 7.4 | 3.94 |
| 10 | 1.2 | 6.6 | 4.39 |
| 11 | 1.2 | 7.4 | 4.52 |
| 12 | 1.2 | 7.2 | 5.02 |
| C13 | 1.2 | 7.7 | 3.72 |
| C14 | 1.2 | 6.2 | |
| 15 | 1.2 | 6.9 | 4.9 |
| 16 | 1.2 | 7.2 | 4.4 |
| 17 | 1.2 | 6.6 | 5.18 |
| 18 | 1.2 | 6.9 | 4.96 |
| 19 | 1.2 | 6.8 | 4.41 |
| 20 | 1.2 | 6.8 | 3.36 |
| C21 | 1.2 | 7.2 | |
| C22 | 1.1 | 6.7 | |
| 23 | 1.1 | 6.5 | 4.82 |
| 24 | 1.1 | 6.8 | 4.78 |
| 25 | 1.1 | 6.9 | 4.23 |
| 26 | 1.2 | 6.9 | 4.83 |
| 27 | 1.1 | 7.1 | 4.97 |
| 28 | 1.1 | 7.3 | 4.77 |
| 29 | 1.1 | 7.8 | 4.76 |
| 30 | 1.1 | 7.2 | 4.71 |
| 31 | 1.1 | 8.1 | |
| 32 | 1.1 | 7.3 | 4.19 |
| 33 | 1.1 | 7.3 | |
| 34 | 1.1 | 6.9 | 5.4 |
| 35 | 1.1 | 7 | |
| 36 | 1.1 | 6.6 | 4.06 |
| 37 | 1.2 | 7.9 | 4.31 |
| 38 | 1.1 | 7.2 | |
| 39 | 1.1 | 7.5 | |

Table III shows the results for shrinkage for the fibers after exposure to 1260°C and 1400°C for 24 and 168 hours.

**TABLE III**

| **Example** | **Shrinkage** | **Shrinkage** |
|---|---|---|
| | **1260/24** | **1400/24** |
| | **%** | **%** |
| C1 | 4.1 | 8.9 |
| C2 | 4.7 | 9.3 |
| C3 | 4.6 | 7.1 |
| 4 | 3.1 | 4.7 |
| 5 | 3.1 | 4.3 |
| 6 | 3 | 3.9 |
| 7 | 3.2 | 4 |
| 8 | | 5.3 |
| 9 | 5 | 6.8 |
| 10 | 5 | 7.6 |
| 11 | 4.7 | 5.7 |
| 12 | 4.3 | 5.7 |
| C13 | 4.1 | 8.9 |
| C14 | 6.9 | 11.4 |
| 15 | 2.95 | 3.96 |
| 16 | 4.35 | 5 |
| 17 | 4.8 | 6.5 |
| 18 | 4.2 | 7.8 |
| 19 | 3.8 | 8.7 |
| 20 | 4 | 12 |
| C21 | 5.18 | 9.45 |
| C22 | 5.6 | 11.5 |
| 23 | 4.2 | 6.6 |
| 24 | 4.3 | 6.1 |
| 25 | 4 | 6 |
| 26 | 4.3 | 5.9 |
| 27 | 4.3 | 5.7 |
| 28 | 3.6 | 4.5 |
| 29 | 3.8 | 4.3 |
| 30 | 4.4 | 5.1 |
| 31 | 3.6 | 4.2 |
| 32 | 3.2 | 3.8 |
| 33 | 3.2 | 3.7 |
| 34 | 3 | 3.5 |
| 35 | 3 | 3.3 |
| 36 | 2.9 | 3.5 |
| 37 | 2.9 | 3.1 |
| 38 | 2.9 | 3.2 |
| 39 | 3 | 3.3 |

Table III shows that a magnesium-silicate inorganic fiber composition including a synergistic combination of strontium oxide and lithium oxide as a component of the fiberization product results in lower linear shrinkage at both 1260°C and 1400°C as compared to magnesium-silicate inorganic fiber without the intended strontium oxide and lithium oxide additions. Without being bound to any particular theory, it appears that strontium may suppress shrinkage and/or enhance the effect of the lithium addition on shrinkage at lower lithium levels. For example, and not by way of limitation, the addition of a synergistic combination of lithium in the amount of greater than 0 to about 0.02 weight percent and strontium in an amount of greater than 0 to about 0.25 weight percent to a magnesia-silicate inorganic fiber results in a linear shrinkage of 4 percent or less after exposure to 1400°C for 24 hours.

Table IV shows the results compression recovery after exposure to 1260°C and 1400°C for 24 and 168 hours, and solubility for the fibers of Table I.

**TABLE IV**

| **Example** | **Comp Rec** | **Comp Rec** | **Comp Rec** | **Solubility (k)** |
|---|---|---|---|---|
| | **1260°C 24 hours** | **1260°C 168 hour** | **1400°C 24 hours** | **ng/cm2 hr** |
| | **%** | **%** | **%** | |
| C1 | 44.7 | 47.5 | 16.9 | 708 |
| C2 | 48.4 | | 18.3 | |
| C3 | 44.4 | | 17.1 | |
| 4 | 53.3 | 55.2 | 22.5 | 678 |
| 5 | 49.7 | | 23.4 | |
| 6 | 53.8 | 54.7 | 30.7 | 1193 |
| 7 | 50.3 | | 25.2 | |
| 8 | | | 26.9 | |
| 9 | 53.1 | | 25.2 | |
| 10 | 53.3 | 56.6 | 30.1 | 610 |
| 11 | 50 | | 18.7 | |
| 12 | 51.5 | | 17.9 | |
| C13 | 45 | 27 | 17 | 708 |
| C14 | 53 | | 26 | 587 |
| 15 | 58 | | 32 | 511 |
| 16 | 60 | | 42 | 389 |
| 17 | 52.7 | 50.2 | 22.3 | 799 |
| 18 | 48.2 | 34.3 | 22.1 | 1039 |
| 19 | 34.8 | 24.7 | 13.3 | 726 |
| 20 | 30.2 | 18.3 | 12.8 | 704 |
| C21 | 53.7 | | 27.5 | 814 |
| C22 | 41.9 | | 17.1 | |
| 23 | 43.4 | | 19.5 | |
| 24 | 50.3 | | 20.1 | |
| 25 | 42.2 | | 17.2 | |
| 26 | 48.6 | | 20 | |
| 27 | 43.7 | | 18.5 | |

| | **24 hours** | **168 hour** | **24 hours** | |
|---|---|---|---|---|
| | **%** | **%** | **%** | |
| 28 | 41.5 | | 14.6 | 708 |
| 29 | 49.7 | | 22.2 | |
| 30 | 49.2 | | 21.2 | |
| 31 | 49.6 | | 18.1 | |
| 32 | 48.3 | | 16.9 | 756 |
| 33 | 48.9 | | 23.1 | |
| 34 | 45.8 | | 17.5 | 777 |
| 35 | 54.4 | | 23.2 | |
| 36 | 48.2 | | 19.6 | 709 |
| 37 | 43.4 | | 14.9 | 806 |
| 38 | 51.5 | | 20 | 711 |
| 39 | 47 | | 15.7 | 780 |

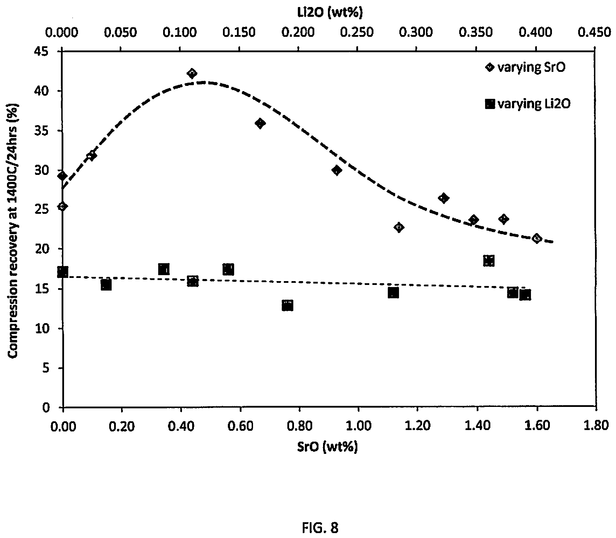

Table IV shows that a magnesium-silicate inorganic fiber composition including a synergistic combination of strontium oxide and lithium oxide as a component of the fiberization product results in an improvement in compression recovery at both 1260°C and 1400°C as compared to magnesium-silicate inorganic fiber without the intended strontium oxide and lithium oxide additions. The magnesium-silicate inorganic fiber composition including a synergistic combination of strontium oxide and lithium oxide as a component of the fiberization product exhibits a compression recovery after exposure to 1260°C for 24 hours of at least 50%. The magnesium-silicate inorganic fiber composition including a synergistic combination of strontium oxide and lithium oxide as a component of the fiberization product exhibits a compression recovery after exposure to 1260°C for 168 hours of at least 30%. The magnesium-silicate inorganic fiber composition including a synergistic combination of strontium oxide and lithium oxide as a component of the fiberization product exhibits a compression recovery after exposure to 1400°C for 24 hours of at least 20%. The magnesium-silicate inorganic fiber composition including a synergistic combination of strontium oxide and lithium oxide as a component of the fiberization product exhibits a compression recovery after exposure to 1400°C for 168 hours of greater than 6%. The dramatic effect of strontium on compression recovery is shown in FIG. 8. As shown in the plot with the diamond-shaped data points, in embodiments where strontium addition is in the range of greater than 0 to about 1.6 weight percent, while the lithium level is held substantially constant at about 0.05 weight percent, the compression recovery after exposure to 1400°C for 24 hours is about 25 percent to about 40 percent. However, as shown in the plot with the square-shaped data points, the addition of lithium oxide alone in an amount greater than 0 to about 0.4 weight percent, without the further addition of strontium oxide, does not result in an improvement of compression recovery after exposure to 1400°C for 24 hours.

Table V shows the results compressive strength after exposure to 1260°C for 24 ad 168 hours, and 1400°C for 24 hours for the fibers of Table I.

**TABLE V**

| Sample | Comp Strength 1260°C/24 hours (psi) | Comp Strength 1400°C/24 hours (psi) | Comp Strength 1260°C/168 hours (psi) |
|---|---|---|---|
| C1 | 8.3 | 7.5 | 10.2 |
| C2 | 9 | 8 | |
| C3 | 10.8 | 7.6 | |
| 4 | 9.1 | 6.3 | 11.4 |
| 5 | 7.7 | 5.1 | |
| 6 | 8.7 | 5 | 9.8 |
| 7 | 7.5 | 4.3 | |
| 8 | | 5.1 | |
| 9 | 13.2 | 5.9 | |
| 10 | 11.2 | 5.9 | 12.1 |
| 11 | 10.7 | 5 | |
| 12 | 11.9 | 4.5 | |
| C13 | 15.3 | 9.8 | |
| C14 | 9.9 | 14.1 | |
| 15 | 8.1 | 6.1 | |
| 16 | 15.3 | 9.8 | |
| 17 | 9.9 | 4.7 | 11.1 |
| 18 | 7 | 2.7 | 5.8 |
| 19 | 5.6 | 2 | 3.9 |
| 20 | 4.9 | 2.3 | 3.6 |
| C21 | 12.7 | 13.4 | |
| C22 | 8 | 7.3 | |
| 23 | 6.5 | 4.4 | |
| 24 | 6.5 | 4.7 | |
| 25 | 6.8 | 4.1 | |
| 26 | 7.3 | 4.6 | |
| 27 | 6.5 | 3.9 | |
| 28 | 7 | 3.2 | |
| 29 | 6.2 | 3.9 | |
| 30 | 7 | 3.9 | |
| 31 | 7.7 | 4.1 | |
| 32 | 6.8 | 2.7 | |
| 33 | 6.8 | 3.2 | |
| 34 | 5.9 | 2.5 | |
| 35 | 6.1 | 3.2 | |
| 36 | 5.9 | 2.8 | |
| 37 | 7.3 | 2.7 | |
| 38 | 5.7 | 2.6 | |
| 39 | 5.9 | 2.8 | |

While the inorganic fiber, thermal insulation, methods of preparing the inorganic fiber, and method of insulating articles using the thermal insulation have been described in connection with various embodiments, it is to be understood that other similar embodiments may be used or modifications and additions may be made to the described embodiments for performing the same function. Furthermore, the various illustrative embodiments may be combined to produce the desired results. Therefore, the inorganic fiber, thermal insulation, methods of preparing the inorganic fiber, and method of insulating articles using the thermal insulation should not be limited to any single embodiment, but rather construed in breadth and scope in accordance with the recitation of the appended claims. It will be understood that the embodiments described herein are merely exemplary, and that one skilled in the art may make variations and modifications without departing from the scope of the invention. All such variations and modifications are intended to be included within the scope of the invention as described hereinabove. Further, all embodiments disclosed are not necessarily in the alternative, as various embodiments of the invention may be combined to provide the desired result.

## Claims

1. A non-biopersistent inorganic glass fiber comprising the fiberization product of 65 to 86 weight percent silica, 14 to 35 weight percent magnesia, greater than 0 to 0.1 weight percent lithium oxide and greater than 0 to 2 weight percent strontium oxide, or
65 to 86 weight percent silica, 14 to 35 weight percent magnesia, 0.05 to 0.1 weight percent lithium oxide and greater than 0 to 3 weight percent strontium oxide.

2. The non-biopersistent inorganic glass fiber of claim 1, comprising the fiberization product of at least one of the following:
(i) 65 to 86 weight percent silica, 14 to 35 weight percent magnesia, greater than 0 to 0.1 weight percent lithium oxide and greater than 0 to 1 weight percent strontium oxide; or
(ii) 65 to 86 weight percent silica, 14 to 35 weight percent magnesia, 0.05 to 0.1 weight percent lithium oxide and greater than 0 to 2 weight percent strontium oxide.

3. The non-biopersistent inorganic glass fiber of claim 1, comprising the fiberization product of 70 to 80 weight percent silica, 15 to 30 weight percent magnesia, greater than 0 to 0.1 weight percent lithium oxide and greater than 0 to 2 weight percent strontium oxide.

4. The non-biopersistent inorganic glass fiber of claim 1, comprises the fiberization product of at least one of the following:
(i) 72 to 86 weight percent silica, 14 to 28 weight percent magnesia, greater than 0 to 0.1 weight percent lithium oxide, and greater than 0 to 2 weight percent strontium oxide; or
(ii) 72 to 80 weight percent silica, 20 to 28 weight percent magnesia, greater than 0 to 2 weight percent strontium oxide, and greater than 0 to 0.1 weight percent lithium oxide.

5. The non-biopersistent inorganic glass fiber of claim 1, comprising the fiberization product of 75 to 80 weight percent silica, 20 to 25 weight percent magnesia, greater than 0 to 0.1 weight percent lithium oxide, and greater than 0 to 2.5 weight percent strontium oxide.

6. The non-biopersistent inorganic glass fiber of claim 5, comprising the fiberization product of 76 to 80 weight percent silica, 20 to 24 weight percent magnesia, greater than 0 to 0.1 weight percent lithium oxide and greater than 0 to 2.5 weight percent strontium oxide.

7. The non-biopersistent inorganic glass fiber of claim 5, comprising the fiberization product of 77 to 80 weight percent silica, 20 to 23 weight percent magnesia, greater than 0 to 0.1 weight percent lithium oxide and greater than 0 to 2.5 weight percent strontium oxide.

8. The non-biopersistent inorganic glass fiber of any one of claims 5 to 7, wherein the fiberization product comprises at least one of the following:
(i) greater than 0 to 1.75 weight percent strontium oxide;
(ii) greater than 0 to 0.75 weight percent strontium oxide; or
(iii) greater than 0 to 0.5 weight percent strontium oxide.

9. The non-biopersistent inorganic glass fiber of claim 8, wherein the fiberization product comprises 0.0075 to 0.1 weight percent lithium oxide.

10. The non-biopersistent inorganic glass fiber of claim 8, wherein the fiberization product comprises 0.009 to 0.075 weight percent lithium oxide.

11. The non-biopersistent inorganic glass fiber of claim 8, wherein the fiberization product comprises 0.02 to 0.05 weight percent lithium oxide.

12. The non-biopersistent inorganic glass fiber of any one of claims 1 to 11, further **characterized by** at least one of the following:
(i) the fiber comprising greater than 0 to 11 weight percent zirconia;
(ii) the fiber containing 1 weight percent or less iron oxide, measured as Fe₂O₃;
(iii) the fiber containing 1 weight percent or less calcia;
(iv) the fiber containing substantially no alkali metal oxide, and/or
(v) the fiber having an average diameter of greater than 2 to 7.5 microns.

13. A method of insulating an article, including disposing on, in, near or around the article, a thermal insulation material comprising a plurality of inorganic fibers comprising the fiberization product of any one of claims 1 to 12.

14. An inorganic fiber containing article comprising at least one of bulk fiber, blankets, blocks, boards, caulking compositions, cement compositions, coatings, felts, mats, moldable compositions, modules, papers, pumpable compositions, putty compositions, sheets, tamping mixtures, vacuum cast shapes, vacuum cast forms, or woven textiles, braids, cloths, fabrics, ropes, tapes, sleeving, wicking, said fiber containing article comprising the fiberization product of any of claims 1 to 12.

## Patentansprüche

1. Nicht-biopersistente anorganische Glasfaser, umfassend das Defibrierungsprodukt von 65 bis 86 Gewichtsprozent Siliciumdioxid, 14 bis 35 Gewichtsprozent Magnesiumoxid, mehr als 0 bis 0,1 Gewichtsprozent Lithiumoxid und mehr als 0 bis 2 Gewichtsprozent Strontiumoxid, oder
65 bis 86 Gewichtsprozent Siliciumdioxid, 14 bis 35 Gewichtsprozent Magnesiumoxid, 0,05 bis 0,1 Gewichtsprozent Lithiumoxid und mehr als 0 bis 3 Gewichtsprozent Strontiumoxid.

2. Nicht-biopersistente anorganische Glasfaser nach Anspruch 1, umfassend das Defibrierungsprodukt von mindestens einem der folgenden:
(i) 65 bis 86 Gewichtsprozent Siliciumdioxid, 14 bis 35 Gewichtsprozent Magnesiumoxid, mehr als 0 bis 0,1 Gewichtsprozent Lithiumoxid und mehr als 0 bis 1 Gewichtsprozent Strontiumoxid oder
(ii) 65 bis 86 Gewichtsprozent Siliciumdioxid, 14 bis 35 Gewichtsprozent Magnesiumoxid, 0,05 bis 0,1 Gewichtsprozent Lithiumoxid und mehr als 0 bis 2 Gewichtsprozent Strontiumoxid.

3. Nicht-biopersistent anorganische Glasfaser nach Anspruch 1, umfassend das Defibrierungsprodukt von 70 bis 80 Gewichtsprozent Siliciumdioxid, 15 bis 30 Gewichtsprozent Magnesiumoxid, mehr als 0 bis 0,1 Gewichtsprozent Lithiumoxid und mehr als 0 bis 2 Gewichtsprozent Strontiumoxid.

4. Nicht-biopersistente anorganische Glasfaser nach Anspruch 1, umfassend das Defibrierungsprodukt von mindestens einem der folgenden:
(i) 72 bis 86 Gewichtsprozent Siliciumdioxid, 14 bis 28 Gewichtsprozent Magnesiumoxid, mehr als 0 bis 0,1 Gewichtsprozent Lithiumoxid, und mehr als 0 bis 2 Gewichtsprozent Strontiumoxid oder
(ii) 72 bis 80 Gewichtsprozent Siliciumdioxid, 20 bis 28 Gewichtsprozent Magnesiumoxid, mehr als 0 bis 2 Gewichtsprozent Strontiumoxid und mehr als 0 bis 0,1 Gewichtsprozent Lithiumoxid.

5. Nicht-biopersistente anorganische Glasfaser nach Anspruch 1, umfassend das Defibrierungsprodukt von 75 bis 80 Gewichtsprozent Siliciumdioxid, 20 bis 25 Gewichtsprozent Magnesiumoxid, mehr als 0 bis 0,1 Gewichtsprozent Lithiumoxid und mehr als 0 bis 2,5 Gewichtsprozent Strontiumoxid.

6. Nicht-biopersistente anorganische Glasfaser nach Anspruch 5, umfassend das Defibrierungsprodukt von 76 bis 80 Gewichtsprozent Siliciumdioxid, 20 bis 24 Gewichtsprozent Magnesiumoxid, mehr als 0 bis 0,1 Gewichtsprozent Lithiumoxid und mehr als 0 bis 2,5 Gewichtsprozent Strontiumoxid.

7. Nicht-biopersistente anorganische Glasfaser nach Anspruch 5, umfassend das Defibrierungsprodukt von 77 bis 80 Gewichtsprozent Siliciumdioxid, 20 bis 23 Gewichtsprozent Magnesiumoxid, mehr als 0 bis 0,1 Gewichtsprozent Lithiumoxid und mehr als 0 bis 2,5 Gewichtsprozent Strontiumoxid.

8. Nicht-biopersistente anorganische Glasfaser nach einem der Ansprüche 5 bis 7, wobei das Defibrierungsprodukt mindestens eines von Folgendem umfasst:
(i) mehr als 0 bis 1,75 Gewichtsprozent Strontiumoxid;
(ii) mehr als 0 bis 0,75 Gewichtsprozent Strontiumoxid oder
(iii) mehr als 0 bis 0,5 Gewichtsprozent Strontiumoxid.

9. Nicht-biopersistente anorganische Glasfaser nach Anspruch 8, wobei das Defibrierungsprodukt 0,0075 bis 0,1 Gewichtsprozent Lithiumoxid umfasst.

10. Nicht-biopersistente anorganische Glasfaser nach Anspruch 8, wobei das Defibrierungsprodukt 0,009 bis 0,075 Gewichtsprozent Lithiumoxid umfasst.

11. Nicht-biopersistente anorganische Glasfaser nach Anspruch 8, wobei das Defibrierungsprodukt 0,02 bis 0,05 Gewichtsprozent Lithiumoxid umfasst.

12. Nicht-biopersistent anorganische Glasfaser nach einem der Ansprüche 1 bis 11, ferner durch mindestens eines von Folgendem gekennzeichnet:
(i) die Faser umfasst mehr als 0 bis 11 Gewichtsprozent Zirconiumdioxid;
(ii) die Faser enthält 1 Gewichtsprozent oder weniger Eisenoxid, gemessen als Fe₂O₃;
(iii) die Faser enthält 1 Gewichtsprozent oder weniger Calciumoxid;
(iv) die Faser enthält im Wesentlichen kein Alkalimetalloxid und/oder
(v) die Faser hat einen mittleren Durchmesser größer als 2 bis 7,5 Mikrometer.

13. Verfahren zum Isolieren eines Gegenstands, umfassend das Anordnen eines Wärmedämmmaterials, umfassend mehrere anorganische Fasern, umfassend das Defibrierungsprodukt nach einem der Ansprüche 1 bis 12, auf dem, in dem, nahe des oder um den Gegenstand.

14. Anorganische Fasern enthaltender Gegenstand, umfassend mindestens eines von losen Fasern, Decken, Blöcken, Pappen, Dichtungszusammensetzungen, Zementzusammensetzungen, Beschichtungen, Faservliesen, Matten, formbaren Zusammensetzungen, Kapseln, Papier, pumpfähigen Zusammensetzungen, Kitt-Zusammensetzungen, Folien, Stampfgemischen, Vakuum-gegossenen Formen, Vakuum-Gießformen oder Geweben, Borten, Kleidung, Stoffen, Seilen, Bändern, Schläuchen, Dochten, wobei der Fasern enthaltende Gegenstand das Defibrierungsprodukt nach einem der Ansprüche1 bis 12 umfasst.

## Revendications

1. Fibre de verre inorganique non biopersistante comprenant le produit de fibérisation de 65 à 86 % en poids de silice, 14 à 35 % en poids de magnésie, supérieur à 0 à 0,1 % en poids d'oxyde de lithium et supérieur à 0 à 2 % en poids d'oxyde de strontium, ou
65 à 86 % en poids de silice, 14 à 35 % en poids de magnésie, 0,05 à 0,1 % en poids d'oxyde de lithium et supérieur à 0 à 3 % en poids d'oxyde de strontium.

2. Fibre de verre inorganique non biopersistante selon la revendication 1, comprenant le produit de fibérisation d'au moins un des éléments suivants
(i) 65 à 86 % en poids de silice, 14 à 35 % en poids de magnésie, supérieur à 0 à 0,1 % en poids d'oxyde de lithium et supérieur à 0 à 1 % en poids d'oxyde de strontium ; ou
(ii) 65 à 86 % en poids de silice, 14 à 35 % en poids de magnésie, 0,05 à 0,1 % en poids d'oxyde de lithium et supérieur à 0 à 2 % en poids d'oxyde de strontium.

3. Fibre de verre inorganique non biopersistante selon la revendication 1, comprenant le produit de fibérisation de 70 à 80 % en poids de silice, 15 à 30 % en poids de magnésie, supérieur à 0 à 0,1 % en poids d'oxyde de lithium et supérieur à 0 à 2 % en poids d'oxyde de strontium.

4. Fibre de verre inorganique non biopersistante selon la revendication 1, comprend le produit de fibérisation d'au moins un des éléments suivants :
(i) 72 à 86 % en poids de silice, 14 à 28 % en poids de magnésie, supérieur à 0 à 0,1 % en poids d'oxyde de lithium et supérieur à 0 à 2 % en poids d'oxyde de strontium ; ou
(ii) 72 à 80 % en poids de silice, 20 à 28 % en poids de magnésie, supérieur à 0 à 2 % en poids d'oxyde de strontium, et supérieur à 0 à 0,1 % en poids d'oxyde de lithium.

5. Fibre de verre inorganique non biopersistante selon la revendication 1, comprenant le produit de fibérisation de 75 à 80 % en poids de silice, 20 à 25 % en poids de magnésie, supérieur à 0 à 0,1 % en poids d'oxyde de lithium et supérieur à 0 à 2,5 % en poids d'oxyde de strontium.

6. Fibre de verre inorganique non biopersistante selon la revendication 5, comprenant le produit de fibrage de 76 à 80 % en poids de silice, 20 à 24 % en poids de magnésie, supérieur à 0 à 0,1 % en poids d'oxyde de lithium et supérieur à 0 à 2,5 % en poids d'oxyde de strontium.

7. Fibre de verre inorganique non biopersistante selon la revendication 5, comprenant le produit de fibérisation de 77 à 80 % en poids de silice, 20 à 23 % en poids de magnésie, supérieur à 0 à 0,1 % en poids d'oxyde de lithium et supérieur à 0 à 2,5 % en poids d'oxyde de strontium.

8. Fibre de verre inorganique non biopersistante selon l'une quelconque des revendications 5 à 7, dans laquelle le produit de fibérisation comprend au moins un des éléments suivants
(i) supérieur à 0 à 1,75 % en poids d'oxyde de strontium ;
(ii) supérieur à 0 à 0,75 % en poids d'oxyde de strontium ; ou
(iii) supérieur à 0 à 0,5 % en poids d'oxyde de strontium.

9. Fibre de verre inorganique non biopersistante selon la revendication 8, dans laquelle le produit de fibérisation comprend 0,0075 à 0,1 % en poids d'oxyde de lithium.

10. Fibre de verre inorganique non biopersistante selon la revendication 8, dans laquelle le produit de fibérisation comprend 0,009 à 0,075 % en poids d'oxyde de lithium.

11. Fibre de verre inorganique non biopersistante selon la revendication 8, dans laquelle le produit de fibérisation comprend 0,02 à 0,05 % en poids d'oxyde de lithium.

12. Fibre de verre inorganique non biopersistante selon l'une quelconque des revendications 1 à 11, **caractérisée en outre par** au moins un des éléments suivants
(i) la fibre comprend supérieur à 0 à 11 % en poids de zircone ;
(ii) la fibre contenant 1 % en poids ou moins d'oxyde de fer, mesuré en Fe₂O₃;
(iii) la fibre contenant 1 % en poids ou moins de calcia ;
(iv) la fibre ne contenant pratiquement pas d'oxyde de métal alcalin, et/ou
(v) la fibre ayant un diamètre moyen supérieur à 2 à 7,5 microns.

13. Procédé d'isolation d'un article, comprenant la disposition sur, dans, à proximité ou autour de l'article, d'un matériau d'isolation thermique comprenant une pluralité de fibres inorganiques comprenant le produit de fibérisation selon l'une quelconque des revendications 1 à 12.

14. Article contenant des fibres inorganiques comprenant au moins un élément parmi des fibres en vrac, couvertures, blocs, panneaux, compositions de calfeutrage, compositions de ciment, revêtements, feutres, nattes, compositions moulables, modules, papiers, compositions pompables, compositions de mastic, feuilles, mélanges de bourrage, formes coulées sous vide, moules coulées sous vide, ou textiles tissés, tresses, vêtement, tissus, cordes, bandes, gainage, mèches, ledit article contenant des fibres comprenant le produit de fibérisation selon l'une quelconque des revendications 1 à 12.
